# EUROPEAN PATENT APPLICATION

(11) **EP 4 407 974 A1**
(43) Date of publication of application: **31.07.2024**
(21) Application number: 22872404.3
(22) Date of filing: 14.03.2022
(51) Int. Cl.: H04N 5/222, G06T 7/00, H04N 23/00, H04N 23/60, H04N 5/275

(54) **INFORMATION PROCESSING DEVICE, IMAGE PROCESSING METHOD, AND PROGRAM**

(30) Priority: 21.09.2021 JP 2021153300
(71) Applicant: Sony Group Corporation, Tokyo 108-0075 (JP)
(72) Inventor: SUGANO, Hisako, Tokyo 108-0075 (JP)
(74) Representative: D Young & Co LLP
(86) International application number: PCT/JP2022/011245
(87) International publication number: WO 2023/047645

(57) **Abstract**

An information processing device includes: a video processing unit configured to perform determination processing related to an object video and a display video in a captured video, by using mask information for separating a display video and an object video in a captured video obtained by capturing a display video of a display device and an object.

## Description

### TECHNICAL FIELD

The present technology relates to a video processing technology implemented as an information processing device, a video processing method, and a program.

### BACKGROUND ART

As an imaging method for producing a video content such as a movie, a technique is known in which a performer performs acting with what is called a green back and then a background video is synthesized.

Furthermore, in recent years, instead of green back shooting, an imaging system has been developed in which a background video is displayed on a display device in a studio provided with a large display device, and a performer performs in front of the background video, to thereby enable imaging of the performer and the background can be imaged, and this imaging system is known as what is called a virtual production, in-camera VFX, or LED wall virtual production.

Patent Document 1 below discloses a technology of a system that images a performer acting in front of a background video.

Furthermore, Patent Document 2 below discloses a technology of synthesizing an actual subject video and a CG video.

### CITATION LIST

### PATENT DOCUMENT

Patent Document 1: US Patent Application Publication No. 2020/0145644 A
Patent Document 2: Japanese Patent Application Laid-Open No. 2008-288922

### SUMMARY OF THE INVENTION

### PROBLEMS TO BE SOLVED BY THE INVENTION

When a background video is displayed on a large display device, and then a performer and a background video are captured with a camera, there is no need to prepare a background video to be separately synthesized, and the performer and staff can visually understand the scene and determine the performance and whether the performance is good or bad, or the like, which are more advantageous than green back shooting.

In such an imaging system, a background video being displayed and an object such as a real person or entity are simultaneously included in a captured video. At that time, there is a specific request such as a demand for preventing the captured video from becoming unnatural.

Therefore, the present disclosure proposes a technique for appropriately executing control related to a camera and a display video in a case where a video displayed on a display device and an object are simultaneously captured.

### SOLUTIONS TO PROBLEMS

An information processing device according to the present technology includes: a video processing unit configured to perform determination processing related to an object video and a display video in a captured video, by using mask information for separating a display video and an object video in the captured video obtained by capturing a display video of a display device and an object.

For example, in a case where a background video or the like is displayed on the display device at the time of imaging, and a real object such as a person or an object is captured together with the display video, the display video and the object of the display device appear in the captured video. In the captured video, the display video and the object video are discriminated using the mask information.

### BRIEF DESCRIPTION OF DRAWINGS

Fig. 1 is an explanatory view of an imaging system of an embodiment of the present technology.
Fig. 2 is an explanatory view of a background video according to a camera position of the imaging system of the embodiment.
Fig. 3 is an explanatory view of a background video according to a camera position of the imaging system of the embodiment.
Fig. 4 is an explanatory view of a video content producing step of the embodiment.
Fig. 5 is a block diagram of the imaging system of the embodiment.
Fig. 6 is a flowchart of background video generation of the imaging system of the embodiment.
Fig. 7 is a block diagram of the imaging system using a plurality of cameras of the embodiment.
Fig. 8 is a block diagram of an information processing device of the embodiment.
Fig. 9 is an explanatory view of a captured video including a display video and an object video.
Fig. 10 is an explanatory view of display of a face recognition frame in the captured video.
Fig. 11 is an explanatory view of a mask of the embodiment.
Fig. 12 is an explanatory view of an SWIR camera.
Fig. 13 is an explanatory view of a camera of the embodiment.
Fig. 14 is an explanatory view of another example of the camera of the embodiment.
Fig. 15 is a flowchart of video processing of the embodiment.
Fig. 16 is a flowchart of subject determination processing of the embodiment.
Fig. 17 is a flowchart of subject determination processing of the embodiment.
Fig. 18 is a flowchart of display control processing of a first embodiment.
Fig. 19 is a flowchart of display control processing of the first embodiment.
Fig. 20 is an explanatory view of a face recognition frame display example of the first embodiment.
Fig. 21 is an explanatory view of a face recognition frame display example of the first embodiment.
Fig. 22 is an explanatory view of an area display example of the first embodiment.
Fig. 23 is a flowchart of focus control processing of a second embodiment.
Fig. 24 is a flowchart of focus control processing of the second embodiment.
Fig. 25 is an explanatory view of focus control of the second embodiment.
Fig. 26 is a flowchart of exposure control processing of the second embodiment.
Fig. 27 is a flowchart of exposure control processing and luminance control processing of the second embodiment.
Fig. 28 is an explanatory view of a configuration example of a display panel of a background video of the embodiment.

### MODE FOR CARRYING OUT THE INVENTION

Hereinafter, embodiments will be described in the following order.
<1. Imaging system and content production>
<2. Configuration of information processing device>
<3. Control processing applicable to virtual production>
<4. First embodiment>
<5. Second embodiment>
<6. Third embodiment>
<7. Example of camera for mask generation>
<8. Configuration example of display panel for background video>
<9. Summary and modification examples>

Note that, in the present disclosure, "video" or "image" includes both a still image and a moving image. Furthermore, "video" refers not only to a state in which video data is displayed on the display, but also to video data in a state in which video data is not displayed on the display.

### <1. Imaging system and video content production>

An imaging system to which the technology of the present disclosure can be applied and production of a video content will be described.

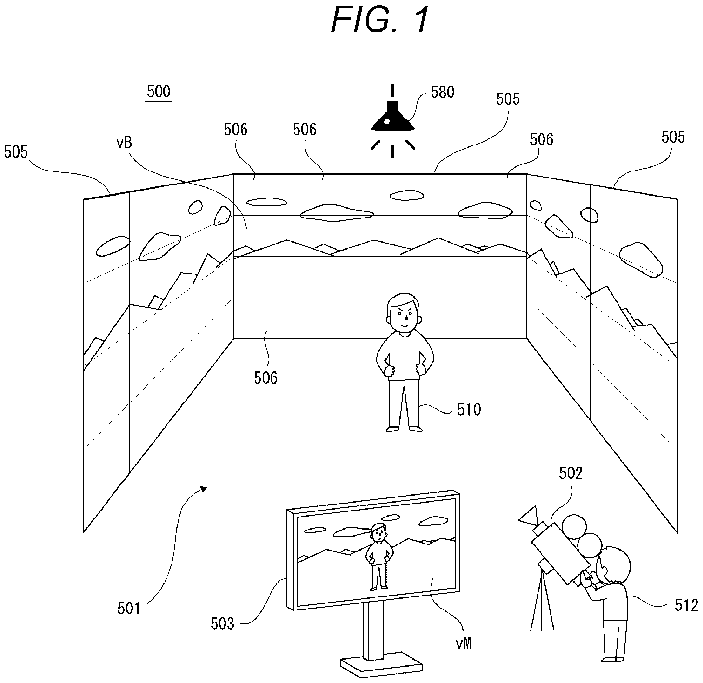

Fig. 1 schematically illustrates an imaging system 500. The imaging system 500 is a system configured to perform imaging as virtual production, and a part of equipment disposed in an imaging studio is illustrated in the drawing.

In the imaging studio, a performance area 501 in which a performer 510 performs performance such as acting is provided. A large display device is disposed on at least a back surface, left and right side surfaces, and an upper surface of the performance area 501. Although the device type of the display device is not limited, the drawing illustrates an example in which an LED wall 505 is used as an example of the large display device.

One LED wall 505 forms a large panel by vertically and horizontally connecting and disposing a plurality of LED panels 506. The size of the LED wall 505 is not particularly limited, but is only necessary to be a size that is necessary or sufficient as a size for displaying a background when the performer 510 is imaged.

A necessary number of lights 580 are disposed at necessary positions such as above or on the side of the performance area 501 to illuminate the performance area 501.

In the vicinity of the performance area 501, for example, a camera 502 for imaging a movie or other video content is disposed. A camera operator 512 can move the position of the camera 502, and can perform an operation of an imaging direction, an angle of view, or the like. Of course, it is also conceivable that movement, angle of view operation, or the like of the camera 502 is performed by remote control. Furthermore, the camera 502 may automatically or autonomously move or change the angle of view. For this reason, the camera 502 may be mounted on a camera platform or a mobile body.

The camera 502 collectively captures the performer 510 in the performance area 501 and the video displayed on the LED wall 505. For example, by displaying a scene as a background video vB on the LED wall 505, it is possible to capture a video similar to that in a case where the performer 510 actually exists and performs at the place of the scene.

An output monitor 503 is disposed near the performance area 501. The video captured by the camera 502 is displayed on the output monitor 503 in real time as a monitor video vM. Thus, a director and staff who produce a video content can confirm the captured video.

As described above, the imaging system 500 that images the performance of the performer 510 in the background of the LED wall 505 in the imaging studio has various advantages as compared with the green back shooting.

For example, in a case of the green back shooting, it is difficult for the performer to imagine the background and the situation of the scene, which may affect the performance. Whereas, by displaying the background video vB, the performer 510 can easily perform, and the quality of performance is improved. Furthermore, it is easy for the director and other staff members to determine whether or not the performance of the performer 510 matches the background or the situation of the scene.

Furthermore, post-production after imaging is more efficient than in the case of the green back shooting. This is because what is called a chroma key composition may be unnecessary or color correction or reflection composition may be unnecessary. Furthermore, even in a case where the chroma key composition is required at the time of imaging, the background screen does not need to be added, which is also helpful to improve efficiency.

In the case of the green back shooting, the color of green increases on the performer's body, dress, and objects, and thus correction thereof is necessary. Furthermore, in the case of the green back shooting, in a case where there is an object in which a surrounding scene is reflected, such as glass, a mirror, or a snowdome, it is necessary to generate and synthesize an image of the reflection, but this is troublesome work.

Whereas, in a case of imaging by the imaging system 500 in Fig. 1, the hue of the green does not increase, and thus the correction is unnecessary. Furthermore, by displaying the background video vB, the reflection on the actual article such as glass is naturally obtained and captured, and thus, it is also unnecessary to synthesize the reflection video.

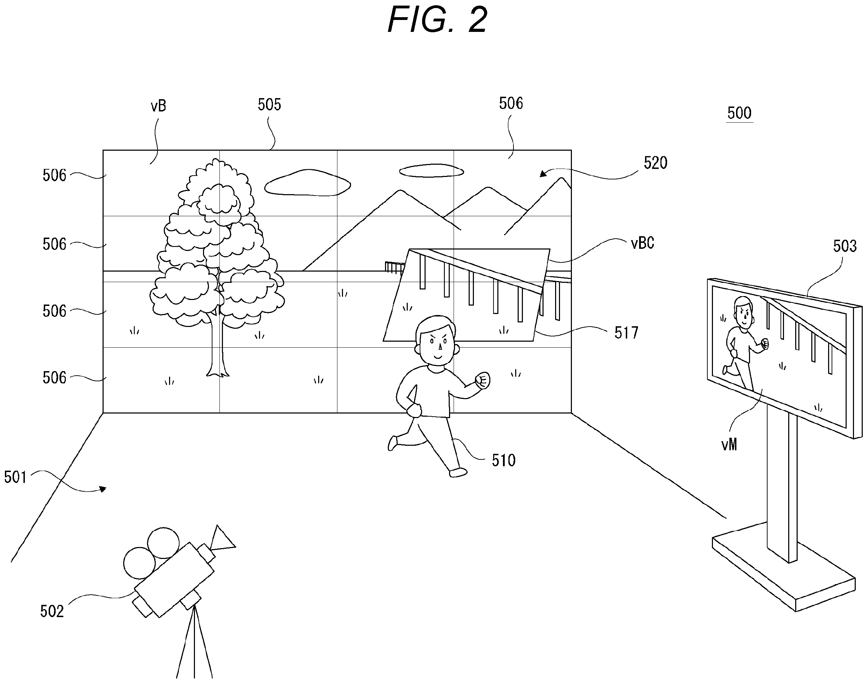

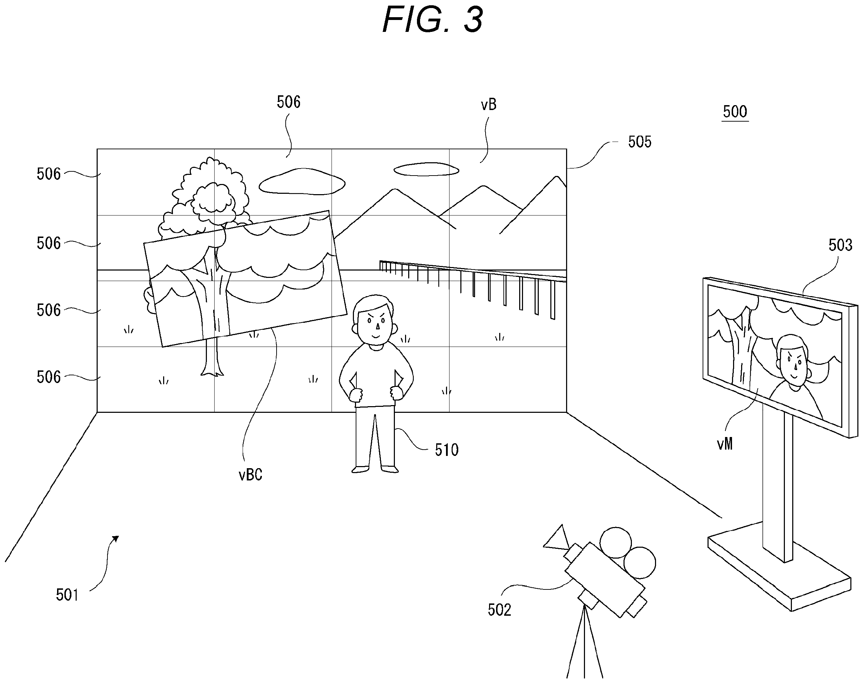

Here, the background video vB will be described with reference to Figs. 2 and 3. Even if the background video vB is displayed on the LED wall 505 and captured together with the performer 510, the background of the captured video becomes unnatural only by simply displaying the background video vB. This is because a background that is three-dimensional and has depth is actually used as the background video vB in a planar manner.

For example, the camera 502 can capture the performer 510 in the performance area 501 from various directions, and can also perform a zoom operation. The performer 510 also does not stop at one place. Then, the actual appearance of the background of the performer 510 should change according to the position, the imaging direction, the angle of view, and the like of the camera 502, but such a change cannot be obtained in the background video vB as the planar video. Accordingly, the background video vB is changed so that the background is similar to the actual appearance including a parallax.

Fig. 2 illustrates a state in which the camera 502 is imaging the performer 510 from a position on the left side of the drawing, and Fig. 3 illustrates a state in which the camera 502 is imaging the performer 510 from a position on the right side of the drawing. In each drawing, a capturing region video vBC is illustrated in the background video vB.

Note that a portion of the background video vB excluding the capturing region video vBC is referred to as an "outer frustum", and the capturing region video vBC is referred to as an "inner frustum".

The background video vB described here indicates the entire video displayed as the background including the capturing region video vBC (inner frustum).

A range of the capturing region video vBC (inner frustum) corresponds to a range actually imaged by the camera 502 in the display surface of the LED wall 505. Then, the capturing region video vBC is a video that is transformed so as to express a scene that is actually viewed when the position of the camera 502 is set as a viewpoint according to the position, the imaging direction, the angle of view, and the like of the camera 502.

Specifically, 3D background data that is a 3D (three dimensions) model as a background is prepared, and the capturing region video vBC is sequentially rendered on the basis of the viewpoint position of the camera 502 with respect to the 3D background data in real time.

Note that the range of the capturing region video vBC is actually a range slightly wider than the range imaged by the camera 502 at the time point. This is to prevent the video of the outer frustum from being reflected due to a drawing delay and to avoid the influence of the diffracted light from the video of the outer frustum when the range of imaging is slightly changed by panning, tilting, zooming, or the like of the camera 502.

The video of the capturing region video vBC rendered in real time in this manner is synthesized with the video of the outer frustum. The video of the outer frustum used in the background video vB is rendered in advance on the basis of the 3D background data, and the video is incorporated as the capturing region video vBC rendered in real time into a part of the video of the outer frustum to generate the entire background video vB.

Thus, even when the camera 502 is moved back and forth, or left and right, or a zoom operation is performed, the background of the range imaged together with the performer 510 is imaged as a video corresponding to the viewpoint position change accompanying the actual movement of the camera 502.

As illustrated in Figs. 2 and 3, the monitor video vM including the performer 510 and the background is displayed on the output monitor 503, and this is the captured video. The background of the monitor video vM is the capturing region video vBC. That is, the background included in the captured video is a real-time rendered video.

As described above, in the imaging system 500 of the embodiment, the background video vB including the capturing region video vBC is changed in real time so that not only the background video vB is simply displayed in a planar manner but also a video similar to that in a case of actually imaging on location can be captured.

Note that a processing load of the system is also reduced by rendering only the capturing region video vBC as a range reflected by the camera 502 in real time instead of the entire background video vB displayed on the LED wall 505.

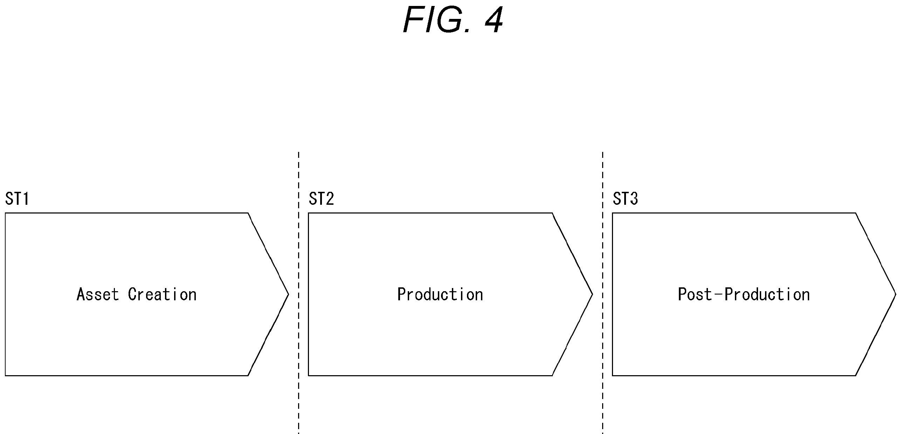

Here, a producing step for a video content as virtual production in which imaging is performed by the imaging system 500 will be described. As illustrated in Fig. 4, the video content producing step is roughly divided into three stages. The stages are asset creation ST1, production ST2, and post-production ST3.

The asset creation ST1 is a step of creating 3D background data for displaying the background video vB. As described above, the background video vB is generated by performing rendering in real time using the 3D background data at the time of imaging. For this purpose, 3D background data as a 3D model is produced in advance.

Examples of a method of producing the 3D background data include full computer graphics (CG), point cloud data (Point Cloud) scan, and photogrammetry.

The full CG is a method of producing a 3D model with computer graphics. Among the three methods, the method requires the most man-hours and time, but is preferably used in a case where an unrealistic video, a video that is difficult to capture in practice, or the like is desired to be the background video vB.

The point cloud data scanning is a method of generating a 3D model based on the point cloud data by performing distance measurement from a certain position using, for example, LiDAR, capturing an image of 360 degrees by a camera from the same position, and placing color data captured by the camera on a point measured by the LiDAR. Compared with the full CG, the 3D model can be created in a short time. Furthermore, it is easy to produce a 3D model with higher definition than that of photogrammetry.

Photogrammetry is a photogrammetry technology for analyzing parallax information from two-dimensional images obtained by imaging an object from a plurality of viewpoints to obtain dimensions and shapes. 3D model creation can be performed in a short time.

Note that the point cloud information acquired by the LIDAR may be used in the 3D data generation by the photogrammetry.

In the asset creation ST1, for example, a 3D model to be 3D background data is created using these methods. Of course, the above methods may be used in combination. For example, a part of a 3D model produced by point cloud data scanning or photogrammetry is produced by CG and synthesized.

The production ST2 is a step of performing imaging in the imaging studio as illustrated in Fig. 1. Element technologies in this case include real-time rendering, background display, camera tracking, lighting control, and the like.

The real-time rendering is rendering processing for obtaining the capturing region video vBC at each time point (each frame of the background video vB) as described with reference to Figs. 2 and 3. This is to render the 3D background data created in the asset creation ST1 from a viewpoint corresponding to the position of the camera 502 or the like at each time point.

In this way, the real-time rendering is performed to generate the background video vB of each frame including the capturing region video vBC, and the background video vB is displayed on the LED wall 505.

The camera tracking is performed to obtain imaging information by the camera 502, and tracks position information, an imaging direction, an angle of view, and the like at each time point of the camera 502. By providing the imaging information including these to a rendering engine in association with each frame, real-time rendering according to the viewpoint position or the like of the camera 502 can be executed.

The imaging information is information linked with or associated with a video as metadata.

It is assumed that the imaging information includes position information of the camera 502 at each frame timing, a direction of the camera, an angle of view, a focal length, an f-number (aperture value), a shutter speed, lens information, and the like.

The illumination control is to control the state of illumination in the imaging system 500, and specifically, to control the light amount, emission color, illumination direction, and the like of the light 580. For example, illumination control is performed according to time setting of a scene to be imaged, setting of a place, and the like.

The post-production ST3 indicates various processes performed after imaging. For example, video correction, video adjustment, clip editing, video effect, and the like are performed.

As the video correction, color gamut conversion, color matching between cameras and materials, and the like may be performed.

As the video adjustment, color adjustment, luminance adjustment, contrast adjustment, and the like may be performed.

As the clip editing, cutting of clips, adjustment of order, adjustment of a time length, and the like may be performed as the clip editing.

As a video effect, there is a case where a synthesis of a CG video or a special effect video or the like is performed.

Next, a configuration of the imaging system 500 used in the production ST2 will be described.

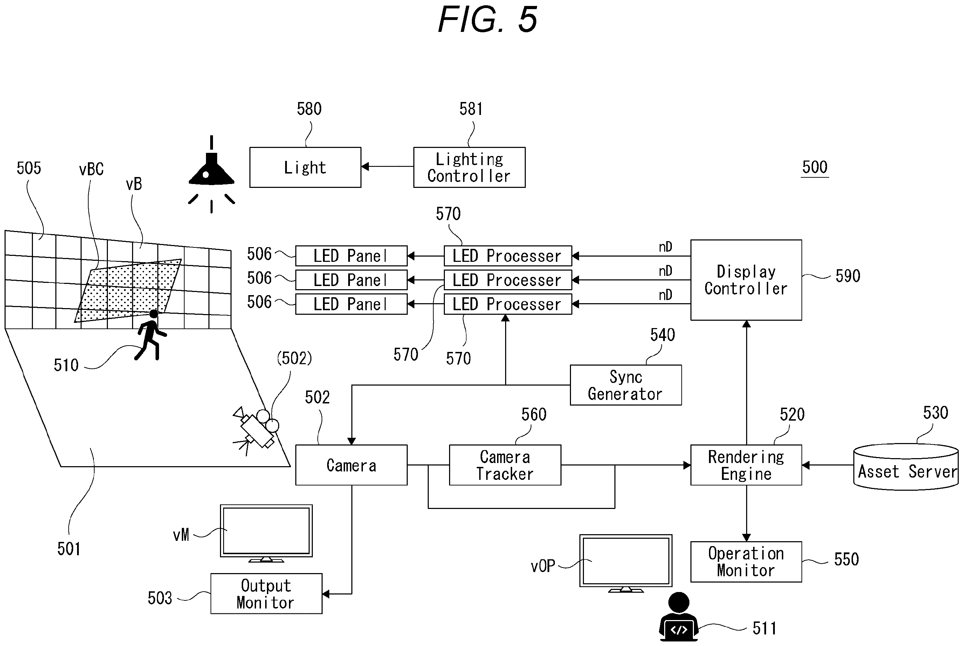

Fig. 5 is a block diagram illustrating a configuration of the imaging system 500 whose outline has been described with reference to Figs. 1, 2, and 3.

The imaging system 500 illustrated in Fig. 5 includes the above-described LED wall 505 including the plurality of LED panels 506, the camera 502, the output monitor 503, and the light 580. As illustrated in Fig. 5, the imaging system 500 further includes a rendering engine 520, an asset server 530, a sync generator 540, an operation monitor 550, a camera tracker 560, LED processors 570, a lighting controller 581, and a display controller 590.

The LED processors 570 are provided corresponding to the LED panels 506, and perform video display driving of the corresponding LED panels 506.

The sync generator 540 generates a synchronization signal for synchronizing frame timings of display videos by the LED panels 506 and a frame timing of imaging by the camera 502, and supplies the synchronization signal to the respective LED processors 570 and the camera 502. However, this does not prevent output from the sync generator 540 from being supplied to the rendering engine 520.

The camera tracker 560 generates imaging information by the camera 502 at each frame timing and supplies the imaging information to the rendering engine 520. For example, the camera tracker 560 detects the position information of the camera 502 relative to the position of the LED wall 505 or a predetermined reference position and the imaging direction of the camera 502 as one of the imaging information, and supplies them to the rendering engine 520.

As a specific detection method by the camera tracker 560, there is a method of randomly disposing a reflector on the ceiling and detecting a position from reflected light of infrared light emitted from the camera 502 side to the reflector. Furthermore, as a detection method, there is also a method of estimating the self-position of the camera 502 by information of a gyro mounted on a platform of the camera 502 or a main body of the camera 502, or image recognition of a captured video of the camera 502.

Furthermore, an angle of view, a focal length, an F value, a shutter speed, lens information, and the like may be supplied from the camera 502 to the rendering engine 520 as the imaging information.

The asset server 530 is a server that can store a 3D model created in the asset creation ST1, that is, 3D background data on a recording medium and read the 3D model as necessary. That is, it functions as a database (DB) of 3D background data.

The rendering engine 520 performs processing of generating the background video vB to be displayed on the LED wall 505. For this reason, the rendering engine 520 reads necessary 3D background data from the asset server 530. Then, the rendering engine 520 generates a video of the outer frustum used in the background video vB as a video obtained by rendering the 3D background data in a form of being viewed from spatial coordinates specified in advance.

Furthermore, as processing for each frame, the rendering engine 520 specifies the viewpoint position and the like with respect to the 3D background data using the imaging information supplied from the camera tracker 560 or the camera 502, and renders the capturing region video vBC (inner frustum).

Moreover, the rendering engine 520 synthesizes the capturing region video vBC rendered for each frame with the outer frustum generated in advance to generate the background video vB as the video data of one frame. Then, the rendering engine 520 transmits the generated video data of one frame to the display controller 590.

The display controller 590 generates divided video signals nD obtained by dividing the video data of one frame into video portions to be displayed on the respective LED panels 506, and transmits the divided video signals nD to the respective LED panels 506. At this time, the display controller 590 may perform calibration according to individual differences of color development or the like, manufacturing errors, and the like between display units.

Note that the display controller 590 may not be provided, and the rendering engine 520 may perform these processes. That is, the rendering engine 520 may generate the divided video signals nD, perform calibration, and transmit the divided video signals nD to the respective LED panels 506.

By the LED processors 570 driving the respective LED panels 506 on the basis of the respective received divided video signals nD, the entire background video vB is displayed on the LED wall 505. The background video vB includes the capturing region video vBC rendered according to the position of the camera 502 or the like at the time point.

The camera 502 can capture the performance of the performer 510 including the background video vB displayed on the LED wall 505 in this manner. The video obtained by imaging by the camera 502 is recorded on a recording medium in the camera 502 or an external recording device (not illustrated), and is supplied to the output monitor 503 in real time and displayed as the monitor video vM.

The operation monitor 550 displays an operation image vOP for controlling the rendering engine 520. An engineer 511 can perform necessary settings and operations regarding rendering of the background video vB while viewing the operation image vOP.

The lighting controller 581 controls emission intensity, emission color, irradiation direction, and the like of the light 580. For example, the lighting controller 581 may control the light 580 asynchronously with the rendering engine 520, or may perform control in synchronization with the imaging information and the rendering processing. Therefore, the lighting controller 581 may perform light emission control in accordance with an instruction from the rendering engine 520, a master controller (not illustrated), or the like.

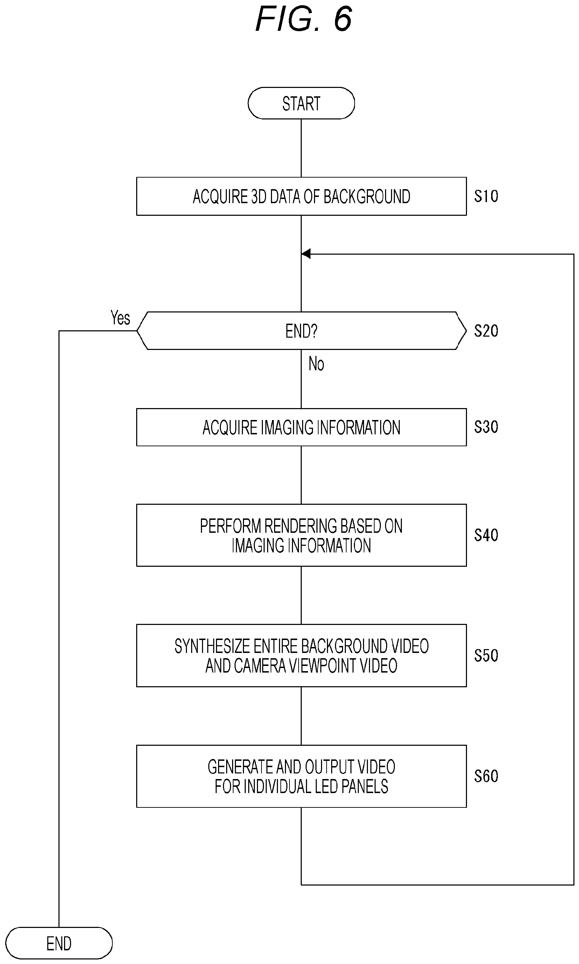

Fig. 6 illustrates a processing example of the rendering engine 520 in the imaging system 500 having such a configuration.

In step S10, the rendering engine 520 reads the 3D background data to be used this time from the asset server 530, and develops the 3D background data in an internal work area.

Then, a video used as the outer frustum is generated.

Thereafter, the rendering engine 520 repeats the processing from step S30 to step S60 at each frame timing of the background video vB until it is determined in step S20 that the display of the background video vB based on the read 3D background data is ended.

In step S30, the rendering engine 520 acquires the imaging information from the camera tracker 560 and the camera 502. Thus, the position and state of the camera 502 to be reflected in the current frame are confirmed.

In step S40, the rendering engine 520 performs rendering on the basis of the imaging information. That is, the viewpoint position with respect to the 3D background data is specified on the basis of the position, the imaging direction, the angle of view, and the like of the camera 502 to be reflected in the current frame, and rendering is performed. At this time, video processing reflecting a focal length, an F value, a shutter speed, lens information, and the like can also be performed. By this rendering, video data as the capturing region video vBC can be obtained.

In step S50, the rendering engine 520 performs processing of synthesizing the outer frustum, which is the entire background video, and the video reflecting the viewpoint position of the camera 502, that is, the capturing region video vBC. For example, the processing is to synthesize a video generated by reflecting the viewpoint of the camera 502 with a video of the entire background rendered at a specific reference viewpoint. Thus, the background video vB of one frame displayed on the LED wall 505, that is, the background video vB including the capturing region video vBC is generated.

The processing in step S60 is performed by the rendering engine 520 or the display controller 590. In step S60, the rendering engine 520 or the display controller 590 generates the divided video signals nD obtained by dividing the background video vB of one frame into videos to be displayed on the individual LED panels 506. Calibration may be performed. Then, the respective divided video signals nD are transmitted to the respective LED processors 570.

By the above processing, the background video vB including the capturing region video vBC captured by the camera 502 is displayed on the LED wall 505 at each frame timing.

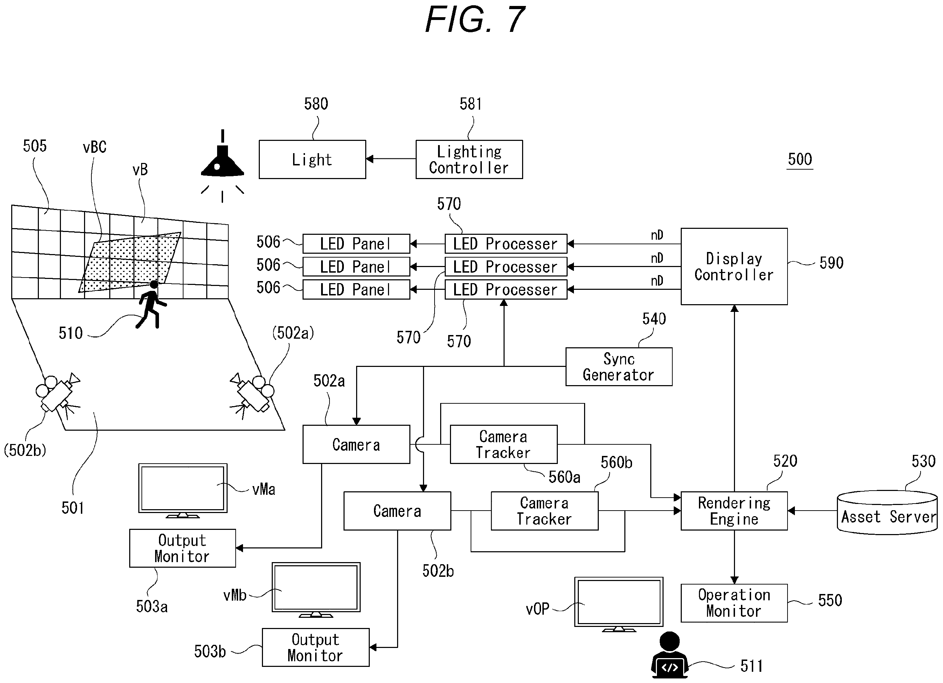

Incidentally, only one camera 502 is illustrated in Fig. 5, but imaging can be performed by a plurality of cameras 502. Fig. 7 illustrates a configuration example in a case where a plurality of cameras 502a and 502b is used. The cameras 502a and 502b can independently perform imaging in the performance area 501. Furthermore, synchronization between the cameras 502a and 502b and the LED processors 570 is maintained by the sync generator 540.

Output monitors 503a and 503b are provided corresponding to the cameras 502a and 502b, and are configured to display the videos captured by the corresponding cameras 502a and 502b as monitor videos vMa and vMb, respectively.

Furthermore, camera trackers 560a and 560b are provided corresponding to the cameras 502a and 502b, respectively, and detect the positions and imaging directions of the corresponding cameras 502a and 502b, respectively. The imaging information from the camera 502a and the camera tracker 560a and the imaging information from the camera 502b and the camera tracker 560b are transmitted to the rendering engine 520.

The rendering engine 520 can perform rendering for obtaining the background video vB of each frame using the imaging information of either the camera 502a side or the camera 502b side.

Note that although Fig. 7 illustrates an example using the two cameras 502a and 502b, it is also possible to perform imaging using three or more cameras 502.

However, in a case where the plurality of cameras 502 is used, there is a circumstance that the capturing region video vBC corresponding to each camera 502 interferes. For example, in the example in which the two cameras 502a and 502b are used as illustrated in Fig. 7, the capturing region video vBC corresponding to the camera 502a is illustrated, but in a case where the video of the camera 502b is used, the capturing region video vBC corresponding to the camera 502b is also necessary. When the capturing region video vBC corresponding to each of the cameras 502a and 502b is simply displayed, they interfere with each other. Therefore, it is necessary to contrive the display of the capturing region video vBC.

### <2. Configuration of information processing device>

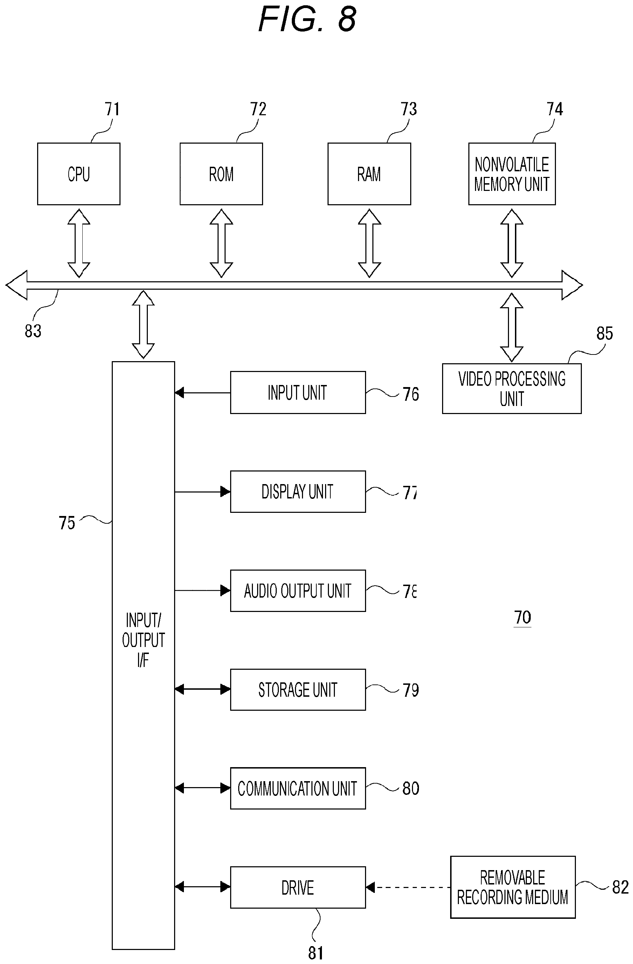

Next, a configuration example of an information processing device 70 that can be used in the asset creation ST1, the production ST2, and the post-production ST3 will be described with reference to Fig. 8.

The information processing device 70 is a device capable of performing information processing, particularly video processing, such as a computer device. Specifically, a personal computer, a workstation, a portable terminal device such as a smartphone and a tablet, a video editing device, and the like are assumed as the information processing device 70. Furthermore, the information processing device 70 may be a computer device configured as a server device or an arithmetic device in cloud computing.

In the case of the present embodiment, specifically, the information processing device 70 can function as a 3D model creation device that creates a 3D model in the asset creation ST1.

Furthermore, the information processing device 70 can function as the rendering engine 520 constituting the imaging system 500 used in the production ST2. Moreover, the information processing device 70 can also function as the asset server 530.

Furthermore, the information processing device 70 can also function as a video editing device configured to perform various types of video processing in the post-production ST3.

A CPU 71 of the information processing device 70 illustrated in Fig. 8 executes various processes in accordance with a program stored in a nonvolatile memory unit 74 such as a ROM 72 or, for example, an electrically erasable programmable read-only memory (EEP-ROM), or a program loaded from a storage unit 79 to a RAM 73. The RAM 73 also appropriately stores data and the like necessary for the CPU 71 to execute the various types of processing.

A video processing unit 85 is configured as a processor that performs various types of video processing. For example, the processor is a processor capable of performing any one of 3D model generation processing, rendering, DB processing, video editing processing, and the like, or a plurality of types of processing.

The video processing unit 85 can be implemented by, for example, a CPU, a graphics processing unit (GPU), general-purpose computing on graphics processing units (GPGPU), an artificial intelligence (AI) processor, or the like that is separate from the CPU 71.

Note that the video processing unit 85 may be provided as a function in the CPU 71.

The CPU 71, the ROM 72, the RAM 73, the nonvolatile memory unit 74, and the video processing unit 85 are connected to one another via a bus 83. An input/output interface 75 is also connected to the bus 83.

An input unit 76 including an operation element and an operation device is connected to the input/output interface 75. For example, as the input unit 76, various types of operation elements and operation devices such as a keyboard, a mouse, a key, a dial, a touch panel, a touch pad, a remote controller, and the like are assumed.

A user operation is detected by the input unit 76, and a signal corresponding to an input operation is interpreted by the CPU 71.

A microphone is also assumed as the input unit 76. A voice uttered by the user can also be input as the operation information.

Furthermore, a display unit 77 including a liquid crystal display (LCD), an organic electro-luminescence (EL) panel, or the like, and an audio output unit 78 including a speaker or the like are integrally or separately connected to the input/output interface 75.

The display unit 77 is a display unit that performs various types of displays, and includes, for example, a display device provided in a housing of the information processing device 70, a separate display device connected to the information processing device 70, and the like.

The display unit 77 displays various images, operation menus, icons, messages, and the like, that is, displays as a graphical user interface (GUI), on the display screen on the basis of the instruction from the CPU 71.

In some cases, the storage unit 79 including a hard disk drive (HDD), a solid-state memory, or the like or a communication unit 80 is connected to the input/output interface 75.

The storage unit 79 can store various pieces of data and programs. A DB can also be configured in the storage unit 79.

For example, in a case where the information processing device 70 functions as the asset server 530, a DB that stores a 3D background data group can be constructed using the storage unit 79.

The communication unit 80 performs communication processing via a transmission path such as the Internet, wired/wireless communication with various devices such as an external DB, an editing device, and an information processing device, bus communication, and the like.

For example, in a case where the information processing device 70 functions as the rendering engine 520, the communication unit 80 can access the DB as the asset server 530, and receive imaging information from the camera 502 or the camera tracker 560.

Furthermore, also in a case of the information processing device 70 used in the post-production ST3, the communication unit 80 can access the DB as the asset server 530.

A drive 81 is also connected to the input/output interface 75 as necessary, and a removable recording medium 82 such as a magnetic disk, an optical disk, a magneto-optical disk, a semiconductor memory, or the like is appropriately mounted.

The drive 81 can read video data, various computer programs, and the like from the removable recording medium 82. The read data is stored in the storage unit 79, and video and audio included in the data are output by the display unit 77 and the audio output unit 78. Furthermore, the computer program and the like read from the removable recording medium 82 are installed in the storage unit 79, as necessary.

In the information processing device 70, for example, software for the processing of the present embodiment can be installed via network communication by the communication unit 80 or the removable recording medium 82. Alternatively, the software may be stored in advance in the ROM 72, the storage unit 79, or the like.

### <3. Control processing applicable to virtual production>

Control processing of the information processing device 70 of the present embodiment applicable to virtual production will be described.

The video captured by the camera 502 by the above-described virtual production imaging system 500 is referred to as a "captured video vC". Normally, the range of the subject included in the video of the captured video vC is similar to that of the monitor video vM. Then, the captured video vC is obtained by imaging an object such as the performer 510 and the background video vB of the LED wall 505 by the camera 502.

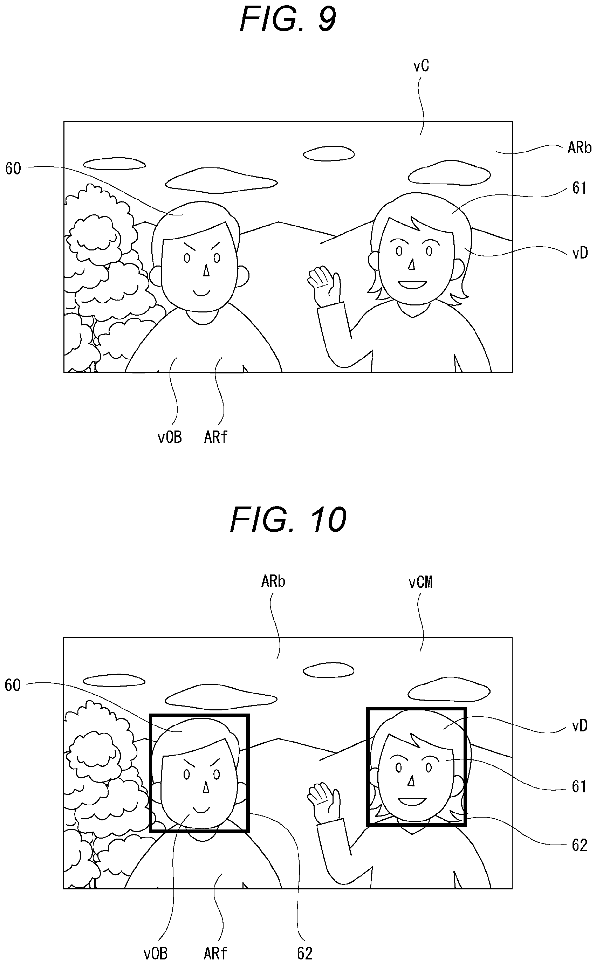

In the processing of the embodiment, for the captured video vC, a background area ARb and a foreground area ARf can be separated using mask information (a mask MK in Fig. 10 to be described later).

The background area ARb is an in-video region in which the background video vB appears in the captured video vC. As can be understood from the above description, the capturing region video vBC of the background video vB is actually reflected in the captured video vC.

The foreground area ARf is an in-video region in which an object serving as a foreground appears in the captured video vC. For example, the region is a region in which a subject that actually exists, such as a person as the performer 510 or an article, is shown.

The background video vB that appears in the captured video vC is obtained by capturing a video displayed on the LED wall 505. For the sake of description, a video displayed on the display device and captured in this manner is referred to as a display video vD. The video of the background area ARb in the captured video vC is this display video vD.

Furthermore, a video of an object that appears in the captured video vC is a video of a real object such as a performer. For the sake of description, this is referred to as an object video vOB. That is, the video of the foreground area ARf is the object video vOB.

As described above, in the embodiment, for the captured video vC, the background area ARb and the foreground area ARf can be separated using the mask MK. This means that, for each subject video, it can be determined whether the subject video is the display video vD or is the object video vOB. Alternatively, this also means that the area of the display video vD and the area of the object video vOB can be determined within one screen (within one frame) of the captured video vC.

In the present embodiment, control related to the camera 502 and generation of the background video vB is performed on the basis of such determination.

First, context of performing such control will be described.

As the background video vB, not only a landscape of nature, a building, or the like but also a person or an article may be displayed. For example, as a volumetric imaging technique, there is also a technique of converting a real person or place into three-dimensional digital data and reproducing the three-dimensional digital data with high image quality. As a result, for example, a person can be three-dimensionally captured and treated as a CG video. If this is used to generate the background video vB in the virtual production, the person may be included in the background video vB.

A case where a person is included in the background video vB in this way is considered.

A case is assumed in which a real subject as the performer 510 and a person displayed on the LED wall 505 are captured at the same time, and the camera 502 and the information processing device 70 perform subject recognition processing by image analysis. In this case, the camera 502 and the like cannot determine which is a video of the real performer 510.

For example, it is assumed that the object video vOB as a video of the real performer 510 and a video of a person as the display video vD are included as the captured video vC in Fig. 9.

When the camera 502 performs face recognition by image analysis, both a face image 60 as the object video vOB and a face image 61 as the display video vD are determined as face images.

Therefore, if the camera 502 causes a face recognition frame 62 to be displayed on a monitor in a case where the face is recognized as a subject, as in a camera monitor video vCM of Fig. 10, the face recognition frame 62 is displayed on both the face images 60 and 61.

Note that the camera monitor video vCM in Fig. 10 is a video that shows a subject being captured by the camera 502 on a viewfinder or another monitor device. The camera monitor video vCM may be considered as the monitor video vM described above.

A camera operator, an operator, and the like can know a subject recognition result of the camera 502, for example, by viewing the camera monitor video vCM. In this case, it is not possible to know which is a real person only from the camera monitor video vCM.

Furthermore, in an autofocus (hereinafter, "AF") operation of the camera 502, a focusing operation may be performed with a recognized subject as a focusing target. In a case where the face recognition frame 62 is displayed as illustrated in Fig. 10, since the camera 502 determines that the both faces are person's faces, focus control is performed on both the face images 60 and 61. Therefore, at the time of virtual production shooting, the camera operator and the like need to make determination as to whether a real subject is focused or a subject (a virtual person, article, or the like) displayed on the LED wall 505 is focused.

In other words, there is a circumstance that, even if it is desired to recognize the real performer 510 and the like, the camera 502 cannot distinguish between the real person or the virtual person on the captured video vC, which makes it difficult to bring the display operation and the AF operation into an optimum state.

In view of such a circumstance, in the present embodiment, for the captured video vC, the background area ARb (display video vD) and the foreground area ARf (object video vOB) are clearly determined using the mask MK. Then, control related to the camera 502 and generation of the background video vB is performed according to a determination result.

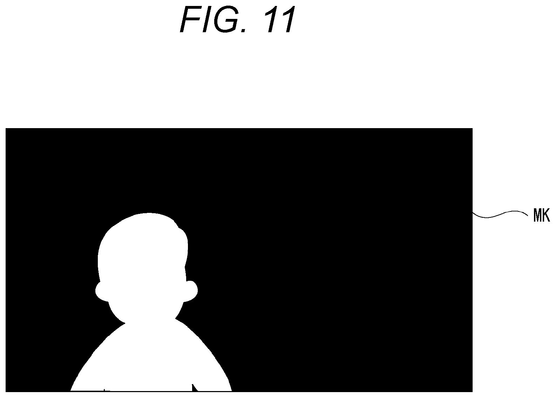

For example, the mask MK as illustrated in Fig. 11 is generated for one frame of the captured video vC as illustrated in Fig. 9. This is information for separating the region of the captured object and the region of the video of the LED wall 505 within one frame of the captured video vC.

For example, by applying the mask MK illustrated in Fig. 11 to the frame of the captured video vC as illustrated in Fig. 9, the information processing device 70 as the rendering engine 520 determines whether the face images 60 and 61 are the object video vOB or the display video vD, causes the camera 502 to execute appropriate display and AF operation, and performs generation control of the background video vB.

Specific processing examples will be described later as first, second, and third embodiments.

Here, a configuration example for generating the mask MK will be described.

In the present embodiment, a short wavelength infrared (SWIR) camera (infrared short wavelength camera) is used to generate the mask MK. By using the SWIR camera, it is possible to separate the video of the LED wall 505 in which the light source changes drastically and the video of the subject to be the foreground.

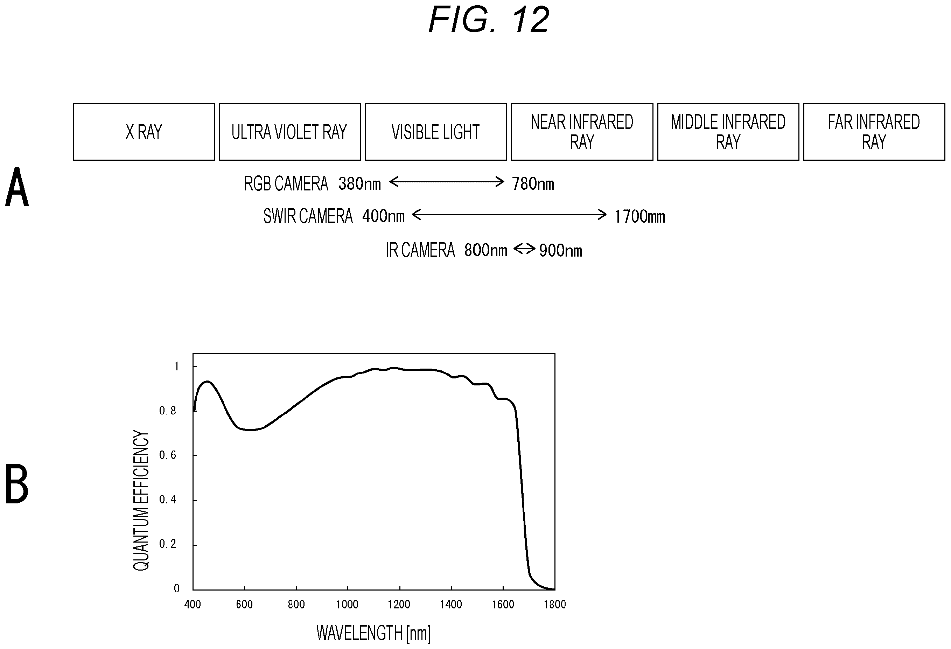

Fig. 12A illustrates wavelength bands that can be captured by an RGB camera, an SWIR camera, and an IR camera (infrared light camera).

The RGB camera is a camera that images visible light in a wavelength band of 380 nm to 780 nm, for example. Normally, the RGB camera is used as the camera 502 for obtaining the captured video vC.

The IR camera is a camera that images near-infrared light of 800 nm to 900 nm.

Examples of the SWIR camera include the following types (a), (b), and (c).
(a) Camera capable of imaging wavelength band of 900 nm to 2500 nm
(b) Camera capable of imaging wavelength band of 900 nm to 1700 nm
(c) Camera capable of imaging wavelength band near 1150 nm (with front-back tolerance)

Although these are examples, for example, the SWIR camera covers a wider wavelength band than the IR camera, and a camera capable of imaging in a wavelength band of, for example, 400 nm to 1700 nm, or the like is commercially available. Fig. 12B illustrates the quantum efficiency for each wavelength of a commercially available SWIR camera. As illustrated, high quantum efficiency is achieved in the range of 400 nm to 1700 nm. That is, since the wavelength bands of the above (b) and (c) can be covered, any SWIR camera having characteristics as illustrated in Fig. 12B can be applied.

In the imaging system 500, for example, an object such as the performer 510 is irradiated with infrared rays using a part of the light 580 and imaged by the SWIR camera. In the near-infrared band, the video on the LED wall 505 is not reflected and becomes a black image, and the performer 510 and the like reflect infrared light and a certain degree of luminance is observed. Therefore, by determining the luminance difference in the frame in the captured video of the SWIR camera, it is possible to generate the mask MK that extracts only the object with high accuracy.

Note that the IR camera can also observe infrared light reflected by the performer 510 and the like, but in a case of the IR camera, it is difficult to detect the hair of a person as a silhouette. Whereas, in a case of the SWIR camera, the range of a person including the hair can be appropriately detected.

Hair is harder to reflect than skin, but it is effective to cover a high wavelength band for detecting a hair region. For example, in a case of a camera capable of imaging around 1150 nm as in (c) above, the reflectance of the hair of a person and the reflectance of the skin are equivalent to each other.

However, the reflectance of the hair varies depending on the gender and the race (dark hair, blonde hair, or the like), and also varies depending on whether or not the hair is dyed, but for example, in a case of the SWIR camera having the characteristic as illustrated in Fig. 12B, the brightness of the skin and the hair becomes equivalent by integrating and imaging the wavelength band of 850 nm to 1700 nm, and the range of the head can be clearly determined.

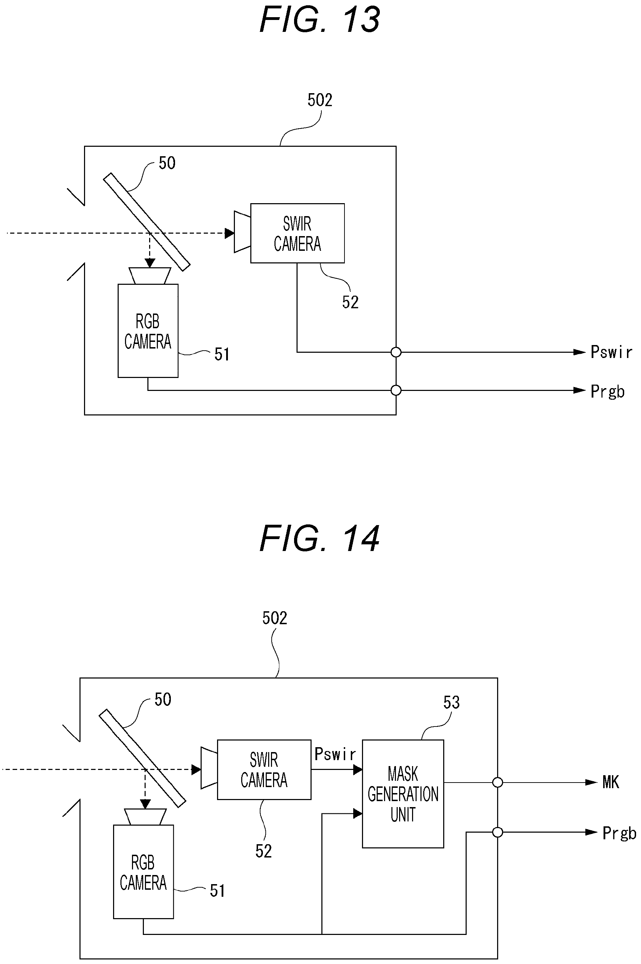

In order to use such an SWIR camera, for example, the camera 502 is configured as illustrated in Fig. 13.

The RGB camera 51 and an SWIR camera 52 are arranged in a unit as one camera 502. Then, incident light is separated by a beam splitter 50, and the incident light is incident on the RGB camera 51 and the SWIR camera 52 in a state of the same optical axis.

A video Prgb used as the captured video vC is output from the RGB camera 51. The SWIR camera 52 outputs a video Pswir for generating the mask MK.

In this manner, by configuring the camera 502 as a coaxial camera including the RGB camera 51 and the SWIR camera 52, the RGB camera 51 and the SWIR camera 52 do not generate parallax, and the video Prgb and the video Pswir can be videos having the same timing, the same angle of view, and the same visual field range.

Mechanical position adjustment and optical axis alignment using a video for calibration are performed in advance in the unit as the camera 502 so that the optical axes coincide with each other. For example, processing of capturing the video for calibration, detecting a feature point, and performing alignment is performed in advance.

Note that, even in a case where the RGB camera 51 uses a high-resolution camera for high-definition video content production, the SWIR camera 52 does not need to have high resolution as well. The SWIR camera 52 may be any camera as long as it can extract a video whose imaging range matches that of the RGB camera 51. Therefore, the sensor size and the image size are not limited to those matched with those of the RGB camera 51.

Furthermore, at the time of imaging, the RGB camera 51 and the SWIR camera 52 are synchronized in frame timing.

Furthermore, the SWIR camera 52 may also perform zooming or adjust a cutout range of an image according to the zoom operation of the RGB camera 51.

Note that the SWIR camera 52 and the RGB camera 51 may be arranged in a stereo manner. This is because the parallax does not become a problem in a case where the subject does not move in the depth direction.

Furthermore, a plurality of SWIR cameras 52 may be provided.

For example, in a case where a configuration as illustrated in Fig. 13 is used as the camera 502 in the imaging system 500, the video Prgb and the video Pswir are supplied to the rendering engine 520.

In the rendering engine 520 having the configuration of Fig. 8, the video processing unit 85 generates the mask MK using the video Pswir. Furthermore, although the rendering engine 520 uses the video Prgb as the captured video vC, the video processing unit 85 can determine the background area ARb and the foreground area ARf by using the mask MK for each frame of the video Prgb, perform necessary control processing and video processing, and then record the captured video vC on the recording medium. For example, the captured video vC is stored in the storage unit 79. Alternatively, it can be transferred to and recorded in the asset server 530 or another external device.

Fig. 14 illustrates another configuration example of the camera 502.

In this case, in addition to the configuration of Fig. 13, a mask generation unit 53 is provided in the unit as the camera 502. The mask generation unit 53 can be configured by, for example, a video processing processor. The mask generation unit 53 receives an input of the video Pswir from the SWIR camera 52 and generates the mask MK. Note that, in a case where the cutout range from the video Pswir is adjusted at the time of generating the mask MK, the mask generation unit 53 also inputs and refers to the video Prgb from the RGB camera 51.

The video Prgb and the mask MK are supplied from the camera 502 to the rendering engine 520. In that case, the rendering engine 520 can acquire the mask MK and separate the background area ARb and the foreground area ARf using the mask MK for each frame of the video Prgb.

Note that, although not illustrated, also in the case of the configurations of Figs. 13 and 14, part of the imaging information is supplied from the camera 502 to the rendering engine 520 as described above.

For example, an angle of view, a focal length, an f-number (aperture value), a shutter speed, lens information, a camera direction, and the like as imaging information are supplied from the camera 502 to the rendering engine 520 as information regarding the RGB camera 51. Furthermore, the position information of the camera 502, the camera direction, and the like detected by the camera tracker 560 are also supplied to the rendering engine 520 as imaging information.

### <4. First embodiment>

Hereinafter, a specific processing example will be described. As a first embodiment, an example will be described in which the rendering engine 520 performs control for display of the camera monitor video vCM by the camera 502 at the time of imaging. Hereinafter, the configuration of Fig. 13 is assumed as the camera 502.

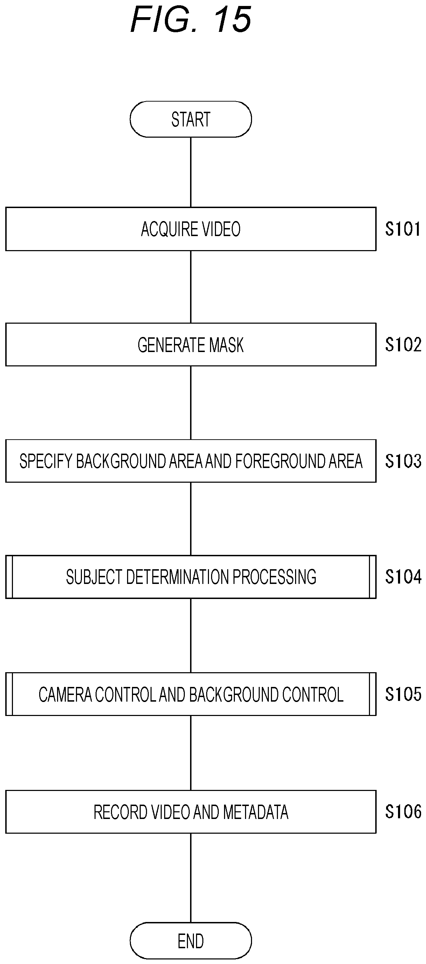

Fig. 15 illustrates control processing performed by the rendering engine 520 for each frame of the captured video vC.

As illustrated in Fig. 6 described above, the rendering engine 520 renders the capturing region video vBC for each frame in order to generate the background video vB to be displayed on the LED wall 505. In parallel with this, the rendering engine 520 performs the processing of Fig. 15 for each frame of the captured video vC imaged by the camera 502.

In step S101, the rendering engine 520 performs video acquisition. That is, the captured video vC of one frame transmitted from the camera 502 is set as a processing target.

Specifically, the rendering engine 520 processes the video Prgb and the video Pswir of one frame transmitted from the camera 502. At the same time, the rendering engine 520 also acquires imaging information transmitted from the camera 502 or the camera tracker 560 corresponding to the frame.

In step S102, the rendering engine 520 generates the mask MK to be applied to the current frame. That is, the rendering engine 520 generates the mask MK using the video Pswir as described above.

In step S103, the rendering engine 520 specifies the captured video vC of the frame acquired this time, that is, the background area ARb and the foreground area ARf for the video Prgb, by using the mask MK generated in step S102. That is, a region of the display video vD and a region of the object video vOB are specified in the frame.

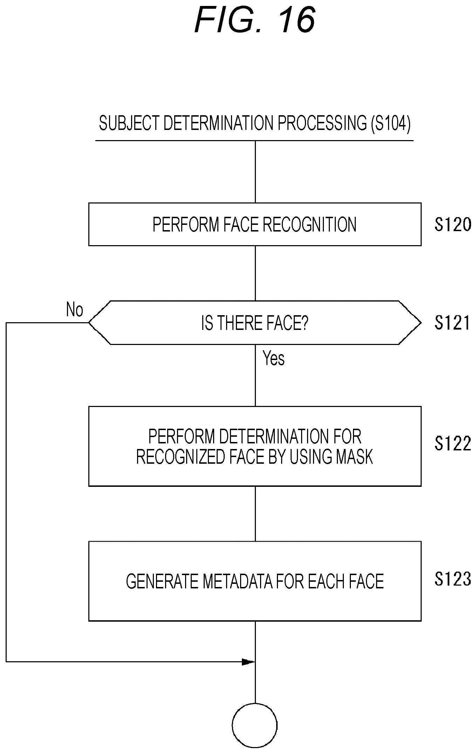

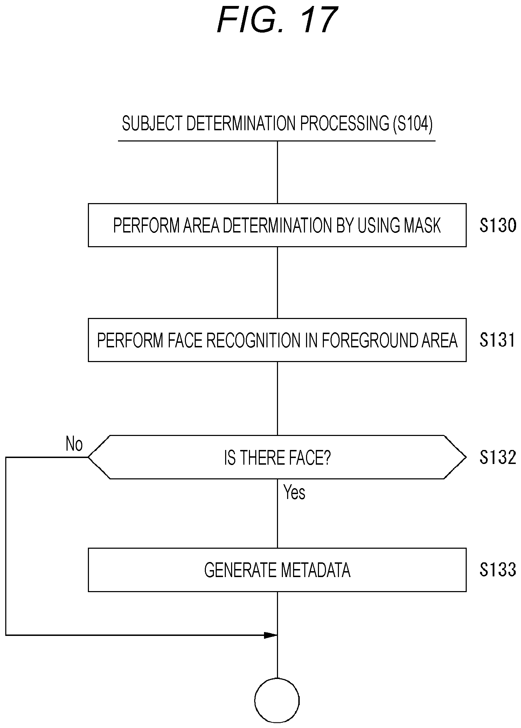

In step S104, the rendering engine 520 performs subject determination processing. Figs. 16 and 17 illustrate an example in which face recognition is performed as the subject determination processing.

In the example of Fig. 16, the rendering engine 520 performs the face recognition processing in the current frame in step S120.

If a face is not detected in the frame, the subject determination processing is terminated from step S121.

In a case where one or more faces are recognized in the frame, the rendering engine 520 proceeds from step S121 to step S122, and determines whether each recognized face is the display video vD or is the object video vOB by using the mask MK. By comparing coordinates of a region recognized as the face in the frame with coordinates of the background area ARb and the foreground area ARf indicated by the mask MK, the rendering engine 520 can determine whether each recognized face is the display video vD or is the object video vOB.

In step S123, the rendering engine 520 generates metadata in accordance with a determination result for each face. That is, position information of the face in the frame, information about whether the face is the display video vD or is the object video vOB, and the like are used as the metadata.

The example of Fig. 17 is an example of recognizing only a face as the object video vOB.

In step S130 of Fig. 17, the rendering engine 520 performs area determination in the current frame by using the mask MK. Specifically, a range of the foreground area ARf is determined.

Then, in step S131, the rendering engine 520 performs face recognition processing in the foreground area ARf.

If no face is recognized, the subject determination processing is terminated from step S132.

In a case where one or more faces are recognized in the foreground area ARf, the rendering engine 520 proceeds from step S132 to step S133, and generates metadata for each face. In this case, position information of the face in the frame, information indicating that the face is the object video vOB, and the like are used as the metadata.

For example, after the subject determination processing in step S104 in Fig. 15 is performed as the processing in Figs. 16 and 17, the rendering engine 520 performs the control processing in step S105 in Fig. 15. The control processing in step S105 is to perform control on the camera 502 or control related to generation processing for the background video vB in the rendering engine 520.

In the first embodiment, an example of performing control related to display and focusing operation of the camera 502 will be described.

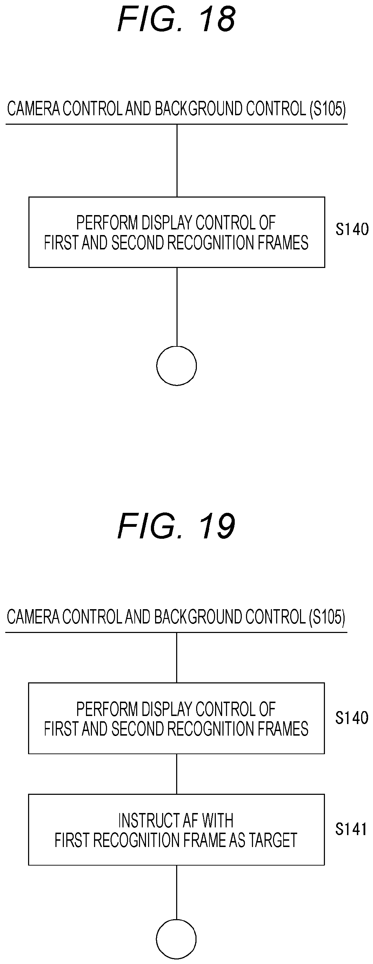

In step S105, the rendering engine 520 performs the processing in Figs. 18 and 19, for example.

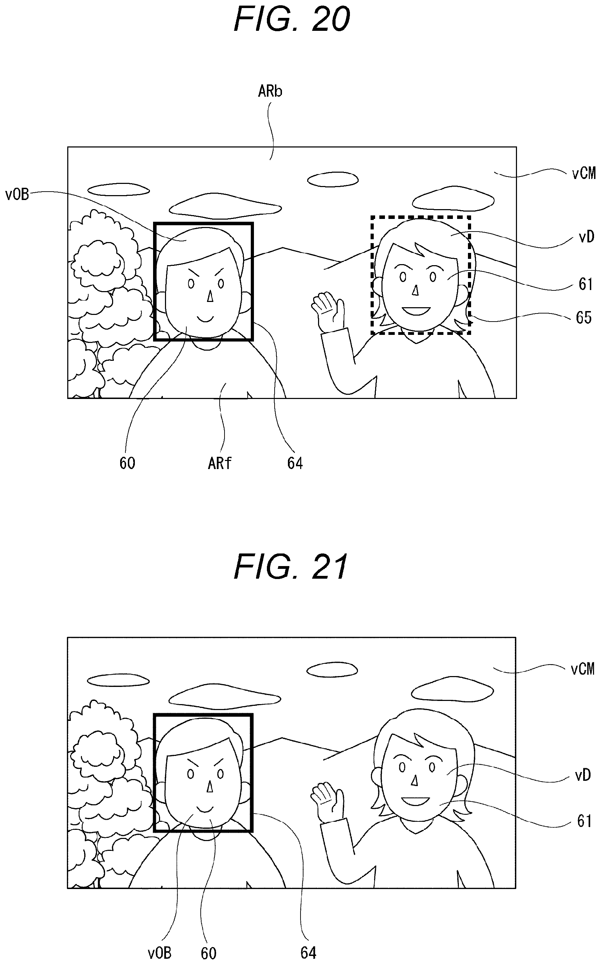

In the example of Fig. 18, as step S140, the rendering engine 520 performs display control of a recognition frame of a subject on the basis of the subject determination processing of Fig. 16. Specifically, as illustrated in Fig. 20, display control of a first recognition frame 64 and a second recognition frame 65 is performed for the face images 60 and 61.

The recognition frame in this example is a recognition frame of a face image in the captured video vC. The first recognition frame 64 is a recognition frame of a face as the object video vOB, and the second recognition frame 65 is a face recognition frame as the display video vD. In Fig. 20, the first recognition frame 64 is indicated by a solid line, and the second recognition frame 65 is indicated by a broken line. In this way, for example, the first recognition frame 64 and the second recognition frame 65 are displayed so as to be different in line type, color, shape, and the like.

That is, as the control processing in step S140, the rendering engine 520 transmits position information about each recognized face and information indicating whether the face is the display video vD or is the object video vOB to the camera 502 in accordance with a result of the subject determination (face recognition), to instruct display of the recognition frame. The camera 502 displays both or one of the first recognition frame 64 and the second recognition frame 65 on the camera monitor video vCM, on the basis of the supplied information. As a result, the first recognition frame 64 and the second recognition frame 65 are displayed in different modes as illustrated in Fig. 20.

Alternatively, the rendering engine 520 may give an instruction to the camera 502 regarding the display mode and the display position of the frames as the first recognition frame 64 and the second recognition frame 65.

By displaying the first recognition frame 64 and the second recognition frame 65 in different modes on the camera monitor video vCM, the camera operator, the operator, and the like can perform imaging and various operations while clearly recognizing whether each face image is the object video vOB or is the display video vD.

Note that the display mode of the face image itself may be changed in addition to the control such that the display modes of the first recognition frame 64 and the second recognition frame 65 are different. For example, while the face of the object video vOB is kept normal, the face of the display video vD may be monochrome (gray scale), specific color, low luminance, or the like. In any case, the display modes are only required to be made different so that whether the face image is the display video vD or is the object video vOB can be distinguished.

The example of Fig. 19 is an example of controlling a focusing operation in addition to the recognition frame display control as the first recognition frame 64 and the second recognition frame 65 as described above.

In step S140, the rendering engine 520 performs display control of the first recognition frame 64 and the second recognition frame 65 as described above. In step S141, the rendering engine 520 performs control to instruct the camera 502 to perform the AF operation to perform the focusing operation on the subject of the first recognition frame 64. Alternatively, the camera 502 may start the AF operation with the subject in the first recognition frame 64 as a target, in response to reception of the position information as the first recognition frame 64.

In this way, in a case where the AF operation is performed with the face image as a target, the AF operation can be correctly performed on the face of the object video vOB even if the face as the display video vD and the face as the object video vOB are mixed in the captured video vC.

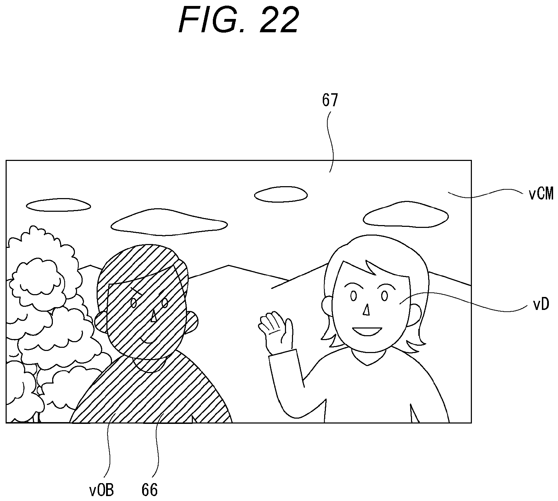

Meanwhile, as described with reference to Fig. 17, there is also a processing example of performing face recognition only in the foreground area ARf as the subject determination processing. In this case, in a case where the control processing is applied as illustrated in Figs. 18 and 19, only the first recognition frame 64 can be displayed as illustrated in Fig. 22 without displaying of the second recognition frame 65. Also in this case, the camera operator and the operator can identify whether the face is the face of the object video vOB or is the face of the display video vD, on the basis of the presence or absence of the first recognition frame 64 in the camera monitor video vCM.

The above control in Figs. 20 and 21 is an example in a case where a face image is recognized, but of course, without limiting to the face image, the above processing can also be applied to a case of recognizing some subject such as an animal or an article.

Furthermore, without limiting to the display control of the recognition frame as illustrated in Figs. 18 and 19, the display control of the camera monitor video vCM performed in step S105 of Fig. 15 is only required to be display control that can identify whether the subject is the display video vD or is the object video vOB. For example, the mask MK may be transmitted to the camera 502, and the camera monitor video vCM may be displayed according to the mask MK.

For example, Fig. 22 illustrates an example in which the display mode is made different between the range defined as the foreground area ARf and a range defined as the background area ARb by the mask MK. For example, foreground area display 66 is displayed with a higher luminance than background area display 67 so as to be more conspicuous than the display video vD. Alternatively, the background area display 67 may be monochrome display or the like while the foreground area display 66 is color display. That is, the foreground area display 66 and the background area display 67 may simply be performed in different modes so that area discrimination as the mask MK can be recognized.

After termination of the control processing as in each example described above as step S105 in Fig. 15, the rendering engine 520 performs video recording in step S106.

That is, the current frame is recorded on the recording medium as one frame data of the captured video vC. At this time, the metadata generated in step S123 of Fig. 16 or step S133 of Fig. 17 is also recorded in correspondence to the frame. For example, the metadata is position information of the face in the frame, information indicating whether the face image is the display video vD or is the object video vOB, and the like.

Furthermore, the mask MK generated in the current frame may also be recorded as the metadata.

Moreover, the control parameter instructed to the camera 502 in step S105 may be recorded as the metadata.

By recording the metadata in correspondence to the frame, at the time of video processing at a later time point, it is possible to determine whether the subject for each frame is the display video vD or is the object video vOB, discriminate the background area ARb and the foreground area ARf with the mask MK, and perform processing according to the camera control at the time point.

### <5. Second embodiment>

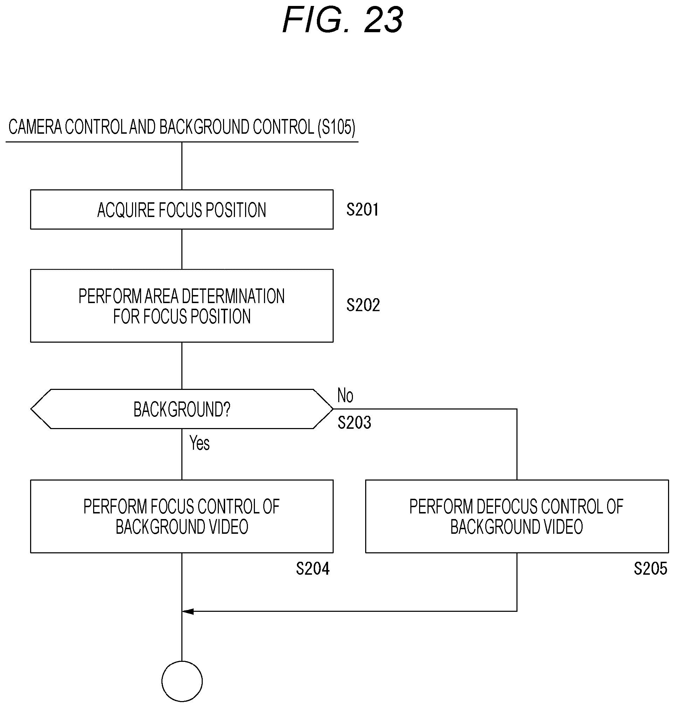

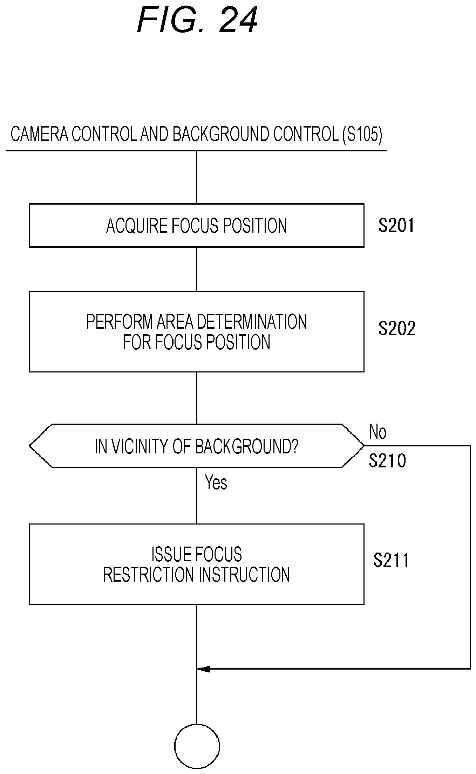

As a second embodiment, an example will be described in which generation processing for the background video vB and control processing of a focusing operation of the camera 502 are performed according to area determination of a focus position. Note that a processing example of the second embodiment can also be described with reference to Fig. 15. However, an example will be described in which processing illustrated in Figs. 23 and 24 as the control processing of step S105 is performed.

For example, it is assumed that the rendering engine 520 has recognized a face image in a frame as in the above example in the processing from step S101 to step S104 in Fig. 15. In the control processing in subsequent step S105, generation processing for the background video vB is assumed to be controlled according to a focus position of the camera 502.

First, an example of Fig. 23 will be described.

In step S201, the rendering engine 520 acquires a current focus position of the camera 502. For example, a current focal length in a case where a manual focusing operation is being performed in the camera 502 may simply be acquired, for example.

In step S202, the rendering engine 520 determines a subject as a focus target from the current focal length and information about the subject determined by the subject determination in step S104, and performs area determination of the subject by using the mask MK. This can be said to be processing of determining whether the subject in focus is a real object or the background video vB of the LED wall 505.

Specifically, the rendering engine 520 determines the subject as the focus target in the frame, that is, the subject in a focused state. Then, by comparing a position of the subject in the frame with the mask MK, it is possible to determine whether the subject as the focus target is the display video vD or is the object video vOB.

Note that the rendering engine 520 acquires, from the camera 502 or the camera tracker 560, position information and imaging direction information of the camera 502 at a time point of each frame, as the imaging information described above. Therefore, at the time point of each frame, it is possible to grasp a positional relationship of the LED wall 505 between with the position and the imaging direction of the camera 502. Therefore, by acquiring the focal length, it can be determined whether the focus is on the object or on the LED wall 505. Alternatively, it can be determined that the focus target gradually changes from the object to the LED wall 505, or vice versa. Such determination may be used in combination.

In step S203, the rendering engine 520 branches the processing depending on whether or not the focus target is the background video vB, that is, the display video vD of the LED wall 505.

In a case where the focus target is an actual object and is not the background video vB, the rendering engine 520 proceeds to step S205 and performs defocus control of the background video vB. That is, a defocus effect is given to the background video vB (capturing region video vBC) generated by the rendering. A defocus amount in this case may be a fixed amount, but may be a variable amount determined according to a distance between the LED wall 505 and a position (focused position) in the performance area 501 obtained from the focal length at the time point.

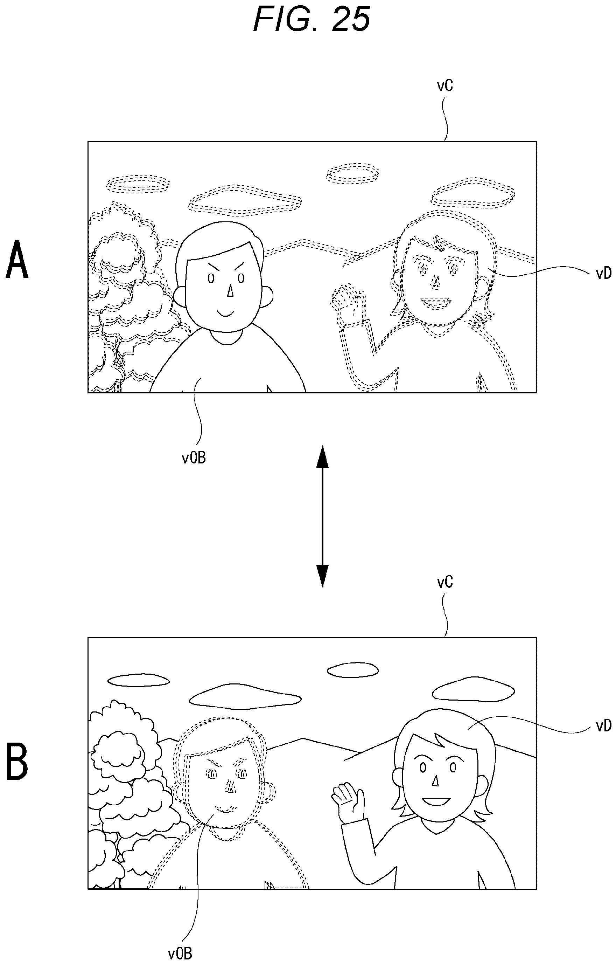

By such control, the captured video vC becomes a video in which the background is blurred and the object video vOB is conspicuous as illustrated in Fig. 25A, for example.

Whereas, in a case where the focus target is the background video vB, the rendering engine 520 proceeds to step S204 and performs focus control of the background video vB. That is, control is performed such that the background video vB to be generated is an image in a focused state without blurring.

By such control, for example, the captured video vC becomes a video in which the background is focused as illustrated in Fig. 25B. The object video vOB does not actually become a focus target of the camera 502, and becomes a blurred video.

Since the rendering engine 520 performs such focus/defocus control of the background video vB in accordance with the focal length of the camera 502, various focus states can be expressed also for the background video vB.

For example, in a case where both the face image as the object video vOB and the face image as the display video vD exist in the captured video vC, imaging suitable for a case where it is desired to focus on a person or the like in the background video vB or a case where it is desired to alternately focus on a person in the object video vOB and a person in the display video vD can be realized.

Furthermore, by variably setting a defocus amount of the background video vB in accordance with a focal position and a distance of the LED wall 505 in each frame, video expression in which a focus target gradually transitions from the object video vOB to the display video vD is also realized.

In a case where the processing of Fig. 23 is performed in step S105 of Fig. 15, at the time of recording in step S106, the rendering engine 520 may record a parameter of the focus/defocus control for the background video vB as the metadata in association with the frame.

Next, an example of Fig. 24 will be described.

As step S105 in Fig. 15, the rendering engine 520 performs steps S201 and S202 in Fig. 24 similarly to Fig. 23 described above.

Then, in step S210, the rendering engine 520 checks whether or not a current focal position is in the vicinity of the background. Here, the vicinity of the background can be defined such as within a predetermined distance from a surface of the LED wall 505. Alternatively, the vicinity of the background may be a value obtained by adding a predetermined value to a depth distance of the object video vOB farthest from the camera 502 at the time point. That is, a state in which the focal position is closer to the LED wall 505 on the depth side than the object video vOB can be detected.

Alternatively, when the focus target transitions to the range of the display video vD in the frame by the mask MK, the focal position may be determined to be in the vicinity of the background.

Then, in a case where the focal position is determined to be in the vicinity of the background, the process proceeds from step S203 to step S211, and the rendering engine 520 issues a focus restriction instruction to the camera 502. This is control to restrict focusing further away.

That is, in the processing example of Fig. 24, when the focal position of the camera 502 is to transition to the LED wall 505 side from the object, control is performed so as to restrict the transition.

As a result, the focus control of the camera 502 is always performed on a real object, and it is possible to prevent the background video vB from being focused. By not focusing on the background video vB of the LED wall 505, generation of moire can be prevented in the captured video vC.

Furthermore, such control is also useful in a case where it is desired to avoid performing the AF operation on a subject recognized in the display video vD.

Note that the processing of Figs. 23 and 24 is described as the processing of step S105 of Fig. 15, but the processing of Figs. 23 and 24 may be performed together with the processing of Figs. 18 and 19 described above.

Furthermore, a processing example is also conceivable in which, in a case where the processing of Figs. 23 and 24 is performed, the subject determination processing of step S104 of Fig. 15 is not performed.

### <6. Third embodiment>

As a third embodiment, an example will be described in which parameters related to an imaging operation of the camera 502 are controlled at the time of imaging. Here, an example will be described in which an F value, a shutter speed, and an ISO gain are controlled as exposure control parameters.

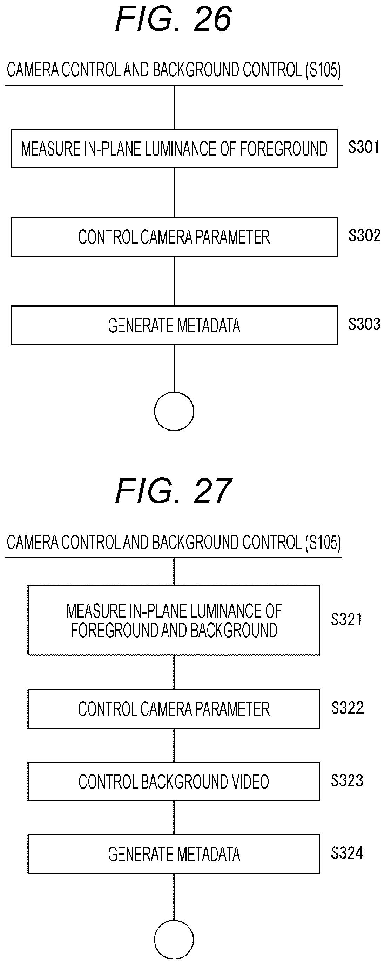

A processing example of the third embodiment can also be described with reference to Fig. 15, and is an example of performing processing illustrated in Figs. 26 and 27 as the control processing of step S105.

For example, after the processing from step S101 to step S104 in Fig. 15, the rendering engine 520 instructs the exposure control parameter of the camera 502 in accordance with luminance of the captured video vC in the control processing of step S105.

First, an example of Fig. 26 will be described.

In step S301, the rendering engine 520 measures in-plane luminance of the foreground area ARf for a current frame. This is, for example, an average value of luminance values of all pixels in the range defined as the foreground area ARf by the mask MK. Alternatively, a peak value or a centroid value may be used. Furthermore, instead of all the pixels in the foreground area ARf, an average value of pixels having high luminance of a predetermined luminance value or more or the like may be used.

In step S302, the rendering engine 520 controls any one of parameters of the F value, the shutter speed, and the ISO gain, or a plurality of parameters thereof, for the camera 502. That is, the exposure control of the camera 502 is performed so that luminance of the object video vOB in the foreground area ARf becomes an appropriate state on the basis of the in-plane luminance of the foreground area ARf measured in step S301.

In step S303, the rendering engine 520 sets the control parameters transmitted to the camera 502 as the metadata.

After the rendering engine 520 performs the above processing of Fig. 26 in step S105 of Fig. 15, in step S106, the rendering engine 520 records frames of the captured video vC, and records the metadata including the control parameter in step S302 in association with the frames. By recording these pieces of metadata in association with the frames, it is possible to determine the exposure parameter for each frame at the time of video processing at a later time point and perform processing corresponding thereto.

By performing the above processing of Figs. 15 and 26, an exposure amount of the camera 502 is automatically controlled appropriately in accordance with a state of the luminance of the object video vOB, regardless of luminance of the background video vB of the LED wall 505.

Next, an example of Fig. 27 will be described.

In step S321, the rendering engine 520 measures in-plane luminance of the foreground area ARf and in-plane luminance of the background area ARb for a current frame.

For example, the in-plane luminance of the foreground area ARf is, similar to that described above, an average value, a peak value, a centroid value, or the like of luminance values of all pixels (or some pixels) in the range defined as the foreground area ARf by the mask MK. The in-plane luminance of the background area ARb is an average value, a peak value, a centroid value, or the like of luminance values of all pixels or some pixels in the range defined as the background area ARb by the mask MK.

In step S322, the rendering engine 520 controls any one of the F value, the shutter speed, and the ISO gain or a plurality of parameters for the camera 502.

Furthermore, in step S323, the rendering engine 520 controls the luminance value of the background video vB (the capturing region video vBC) to be rendered.

The control in steps S322 and S323 is to adjust exposure of the camera 502 and adjust the luminance of the background video vB, in accordance with the in-plane luminance of the foreground area ARf and the in-plane luminance of the background area ARb measured in step S321.

If the background video vB displayed on the LED wall 505 at the time of imaging is too bright, the display video vD may be overexposed. Furthermore, when the background video vB is too bright, the object video vOB may become too dark by exposure adjustment of the camera 502 according to the brightness. Furthermore, there is also a case where the background video vB is too dark, the subject becomes dark, and additional lighting of the studio becomes necessary.

Therefore, an in-plane luminance value is measured so that the object video vOB and the display video vD in the captured video vC have natural brightness, and the exposure amount adjustment of the camera 502 and the luminance adjustment of the background video vB are performed according to the luminance value.

In step S324, the rendering engine 520 sets, as metadata, a control parameter transmitted to the camera 502 and a control parameter of the background video vB.

After the rendering engine 520 performs the above processing of Fig. 27 in step S105 of Fig. 15, in step S106, the rendering engine 520 records frames of the captured video vC, and records the metadata including the control parameter in step S303 in association with the frames.

By recording these pieces of metadata in association with the frames, it is possible to determine the exposure parameter for each frame and a luminance parameter of the background video vB at the time of video processing at a later time point, and perform processing corresponding thereto.

By performing the processing of Figs. 15 and 27, the luminance of the captured display video vD and object video vOB is adjusted, and the captured video vC in which the foreground and the background have natural brightness can be obtained.

The processing of Figs. 26 and 27 is described as the processing of step S105 of Fig. 15, but the processing of Figs. 23 and 24 may be performed together with the processing of Figs. 18 and 19 or the processing of Figs. 23 and 24.

Furthermore, a processing example is also conceivable in which, in a case where the processing of Figs. 26 and 27 is performed, the subject determination processing of step S104 of Fig. 15 is not performed.

Furthermore, a processing example is also conceivable in which the processing of step S322 is not performed and only the control of the background video vB of step S323 is performed in Fig. 27.

Note that, although an example of instructing the exposure control parameter as the parameter of the camera 502 has been described, for example, it is also possible to perform camera control of giving an instruction to the camera 502 regarding an imaging mode according to a scene in accordance with subject determination processing. The imaging mode is, for example, a portrait mode, a landscape mode, a night scene mode, or a sunset mode. The imaging mode is a moving object mode or the like. For example, it is possible to determine whether to be the object video vOB or the display video vD with the mask MK, so that the imaging mode can be controlled according to a subject type of the object video, or the imaging mode can be controlled according to a scene of the display video vD (background video vB).

### <7. Example of camera for mask generation>

Furthermore, in the description above, the SWIR camera 52 is used to generate the mask MK, but a camera other than the SWIR camera 52 may be used to generate the mask MK for specifying the region of a real subject.

For example, the depth of a subject is measured using a depth camera such as Kinect or LiDAR or a time of flight (ToF) sensor, and the subject is separated by a distance difference between the subject and the background LED, whereby the mask MK can be generated.

Furthermore, for example, the mask MK can be generated by separating a subject using the body temperature of a person using a thermographic camera.

### <8. Configuration example of display panel for background video>

Although the example of the LED wall 505 has been described with reference to Fig. 1, another example of the display panel of the background video vB will be described. Various configurations are conceivable for the display panel of the background video vB.

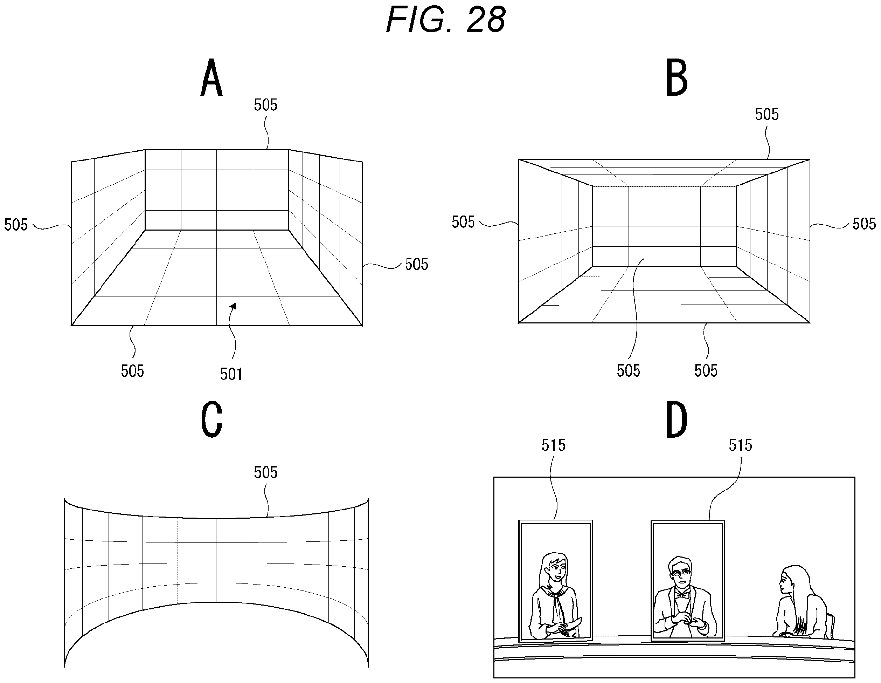

Fig. 28A is an example in which the LED wall 505 is provided including the floor portion in the performance area 501. In this case, the LED wall 505 is provided on each of the back surface, the left side surface, the right side surface, and the floor surface.

Fig. 28B illustrates an example in which the LED wall 505 is provided on each of the top surface, the back surface, the left side surface, the right side surface, and the floor surface so as to surround the performance area 501 on the box.

Fig. 26C illustrates an example in which the LED wall 505 having a cylindrical inner wall shape is provided.

The LED wall 505 has been described as the display device, and an example has been described in which the display video to be displayed is the background video obtained by rendering the 3D background data. In this case, the background area ARb as an example of a display video area and the foreground area ARf as an object video area in the captured video vC can be separated to perform video processing.

The technology of the present disclosure can be applied not only to such a relationship between the background and the foreground.

For example, Fig. 28D illustrates an example in which a display device 515 is provided side by side with another subject. For example, in a television broadcasting studio or the like, a remote performer is displayed on the display device 515 and imaged together with a performer actually in the studio.

In this case, there is no clear distinction between the background and the foreground, but the captured video includes a mixture of the display video and the object video. Even in such a case, since the display video area and the object video area can be separated using the mask MK, the processing of the embodiment can be similarly applied.

Although various examples other than this are conceivable, in a case where the captured video includes the video of the display device and the video of the object actually present, the technology of the present disclosure can be applied in a case where various types of video processing are performed by distinguishing these areas.

### <9. Summary and modification example>

According to the above-described embodiments, the following effects can be obtained.

The information processing device 70 according to the embodiment includes: the video processing unit 85 configured to perform processing of determining the object video vOB and the display video vD by using the mask MK, on the captured video vC obtained by capturing a display video (for example, the background video vB) of the display device and an object. Specifically, an object video area (for example, the foreground area ARf) and a display video area (for example, the background area ARb) in the captured video vC are determined using the mask MK, and whether the subject video is the object video vOB or is the display video vD is determined.

As a result, in a case of simultaneously imaging a video displayed on the display device and a real object, a subject and an area as the control target can be controlled according to a determination result of whether to be the display video vD or the object video vOB.

In the first, second, and third embodiments, the LED wall 505 has been described as the display device, and an example has been described in which the display video vD to be displayed is the background video vB obtained by rendering 3D background data. Furthermore, the captured video vC is a video obtained by imaging an object, for example, the performer 510 or an article with the LED wall 505 displaying the background video vB on a background.

By capturing the background video vB displayed on the LED wall 505, each frame of the captured video vC includes the background area ARb in which the background video vB is captured and the foreground area ARf in which objects such as the performer 510 and an object are captured. There is a control suitable for each of the background area ARb and the foreground area ARf, since the background area ARb and the foreground area ARf are different in terms of the target of imaging, that is, a displayed video and an actual object.

For example, in a case of performing display of the face recognition result, the focus control, or the exposure control in the camera 502, or the focus control, the exposure control, or the like for the background video vB, the background area ARb and the foreground area ARf in the captured video vC can be distinguished, which makes it possible to perform control suitable for a control target area and subject. As a result, appropriate control is realized in a case where video production is performed as virtual production, and video production utilizing advantages of virtual production can be promoted.

The first embodiment has shown an example in which, as the determination processing, the video processing unit 85 performs processing of determining whether a subject recognized by subject determination in the captured video vC is the object video vOB or is the display video vD.

For example, as in the example of Fig. 16, in a case where the face image recognition processing is performed, it is possible to perform control suitable for the recognized face image by determining whether each face image is the display video vD or is the object video vOB. The recognition processing is not limited to processing for a face image. Various subjects are assumed, such as a face of a person, a body of a person, a part of a body such as a hand or a foot, a face or a body object of an animal, an artificial object, and a natural object. When these subjects are recognized, it is possible to perform appropriate control by determining whether the subject is the display video vD or is the object video vOB.

The first embodiment has shown an example in which, as the determination processing, the video processing unit 85 determines the object video area (foreground area ARf) in which the object video vOB is shown in the captured video vC, and performs the subject determination in the object video area.

For example, as in the example of Fig. 17, the foreground area ARf is determined in the captured video vC, and the recognition processing of a face image is performed in the foreground area ARf. This processing enables face recognition and the like for the object video vOB. Similarly to that described above, the recognition processing is not limited to processing for a face image.

Furthermore, unlike the example of Fig. 17, the background area ARb as the display video area in which the display video vD is shown in the captured video vC may be determined, and the recognition processing of the subject may be performed in the background area ARb. As a result, face recognition and the like for the display video vD can be performed.

The first, second, and third embodiments have shown an example in which the video processing unit 85 controls the camera 502 that captures a display video of the display device and an object on the basis of a result of the determination processing.

As a result, the camera 502 can perform an operation according to whether the subject as a control target is the object video vOB or is the display video vD.

The first embodiment has shown an example in which the video processing unit 85 performs control on the camera 502 regarding display of a subject on the basis of a result of the determination processing.

For example, in performing the recognition processing of a subject such as a face image and displaying a recognition frame on the camera monitor video vCM, it is possible to perform display control suitable for the recognized face image by determining whether each face image is the display video vD or is the object video vOB. For example, by displaying the first recognition frame 64 and the second recognition frame 65 as illustrated in Fig. 20 for the recognized face images, the camera operator, the operator, and the like can easily recognize whether each of the face images 60 and 61 is the object video vOB or is the display video vD.

Furthermore, as illustrated in Fig. 21, for example, a face recognition frame (first recognition frame 64) may be displayed only on the face image 60 as the object video vOB.

As still another example, the face recognition frame may be displayed only on the face image 61 as the display video vD. That is, the subject recognition processing is performed in the display video area (background area ARb), and the face recognition frame is displayed on the recognized face image.

Furthermore, as illustrated in Fig. 22, display may be executed in which the foreground area ARf and the background area ARb are clearly recognized. Also by these display controls, the camera operator, the operator, and the like can easily recognize that the subject is the display video vD in the captured video vC, and the camera 502 can be caused to execute an appropriate operation.

The first and second embodiments have shown an example in which the video processing unit 85 performs control on the camera 502 regarding a focusing operation on the basis of a result of the determination processing.

In particular, the first embodiment has shown an example in which control is performed such that the focusing operation is performed on an object. For example, as in the example of Fig. 19, in a case where the camera 502 performs the AF processing on a face image, it is possible to instruct to execute the AF operation on the face image as the object video vOB. As a result, appropriate AF control can be performed on the performer 510 and the like.

Furthermore, as in the example of Fig. 24 of the second embodiment, in a case where a focus point goes to the display video vD side of the LED wall 505 by the AF operation or the manual focus operation, it is also possible to prevent generation of moire in the captured video vC by limiting focusing on the LED wall 505.

The third embodiment has shown an example in which the video processing unit 85 performs exposure control on the camera 502 on the basis of a result of the determination processing.

As a result, the luminance of the object video vOB and the display video vD in the captured video vC can be appropriately adjusted. In particular, regardless of the luminance of the background video vB of the LED wall 505, an exposure state for an object can be set to an appropriate state.

The second and third embodiments have shown an example in which the video processing unit 85 performs control related to a display video of the display device on the basis of a result of the determination processing.

As in the examples of Figs. 23 and 27, by controlling the background video vB displayed on the LED wall 505, quality of the captured video vC in which the display video vD and the object video vOB are mixed can be improved.

The second embodiment has shown an example in which the video processing unit 85 performs control related to a focus state of a display video of the display device on the basis of a result of the determination processing.

For example, as in the example of Fig. 23, a focused state of the background video vB displayed on the LED wall 505 is changed according to a focus position by the camera 502. As a result, states of focus or blur of the object video vOB and the display video vD in the captured video vC are controlled in conjunction with the focusing operation of the camera 502.

The processing of adding a specific change in focus or blur in the background video vB may be performed only for a specific subject in the capturing region video vBC instead of the entire background video vB (capturing region video vBC). For example, in the example as illustrated in Fig. 25, the background video vB includes a landscape and a person, but only a video (for example, a video of a person) of a portion set as a focus target in a screen can be focused or defocused.

The third embodiment has shown an example in which the video processing unit 85 performs control related to luminance of a display video of the display device on the basis of a result of the determination processing.

For example, as in the example of Fig. 27, control is performed to adjust the luminance of the background video vB in accordance with a balance of in-plane luminance between the background area ARb and the foreground area ARf. As a result, the captured video vC with a good luminance balance can be obtained in the captured video vC in which the display video vD and the object video vOB are mixed.

The first, second, and third embodiments have shown an example in which the video processing unit 85 generates metadata to be associated with the captured video vC with regard to the determination processing.

By generating information regarding the determination processing as the metadata, for example, the metadata can be recorded or transmitted in association with the captured video vC. As a result, it is possible to refer to the information regarding the determination processing at the time of subsequent processing on the captured video vC.

In the embodiment, the metadata includes a determination result of the determination processing for a subject of the captured video. For example, in the examples of Figs. 16 and 17, metadata including information about the determination result as to whether to be the object video vOB or the display video vD is generated for the recognized subject.

As a result, at the time of subsequent processing on the captured video vC, it is possible to determine whether to be the object video vOB or the display video vD for the subject in the captured video vC, and perform image processing according to the determination.

In the embodiment, the metadata includes a control parameter based on the determination result of the determination processing for a subject or an area of the captured video. For example, in the examples of Figs. 26 and 27, a camera parameter instructed on the basis of the determination, a control parameter of the background video vB, and metadata including luminance information based on these are generated.

As a result, it is possible to refer to the control contents according to the subject and the area in the captured video vC at the time of subsequent processing on the captured video vC. It is also possible to perform editing and the like according to control contents and the like at the time of imaging.

In the embodiment, the metadata includes the mask MK.

As a result, the mask MK for each frame of the captured video vC can be used at the time of subsequent processing on the captured video vC. Therefore, at the stage of the post-production ST3, the information processing device 70 can determine the display video vD and the object video vOB for a subject by using the mask MK, and also perform video processing according to the determination result.

In the first, second, and third embodiments, the video processing unit 85 generates the mask MK for each frame of the captured video vC at the time of imaging, and performs the determination processing for the frame.

For example, at the time of imaging by the camera 502, substantially in real time, the rendering engine 520 determines the background area ARb and the foreground area ARf by using the mask MK for each frame of the captured video vC, and determine whether the recognized subject is the object video vOB or is the display video vD. Then, control related to the camera 502 and generation of the background video vB is performed on the basis of the determination result. As a result, a high-quality captured video vC can be obtained at the stage of the production ST2.

Note that the rendering engine 520 can appropriately perform the determination processing for each frame by generating the mask MK by using the video Pswir for each frame of the captured video vC while the camera 502 is imaging.

Whereas, in a case where the mask MK is generated by the camera 502 as illustrated in Fig. 14, the rendering engine 520 can use the mask MK transmitted from the camera 502. In this case, it is not necessary to generate the mask MK in step S102 in Fig. 15, and a processing load of the rendering engine 520 is reduced.

In the embodiment, the mask MK is generated on the basis of the video Pswir obtained by the SWIR camera 52 that captures the same video as the captured video.

For example, the video captured by the SWIR camera having high sensitivity in a wide wavelength band from the visible light region to the near-infrared region (for example, from 400 nm to 1700 nm) can appropriately separate the object (particularly the person) from the background video vB in which the light source changes drastically. As a result, by generating the mask MK, the display video vD of the background area ARb and the object video vOB of the foreground area ARf can be appropriately discriminated.

In the embodiment, the SWIR camera 52 is configured in such a manner that subject light is incident on the same optical axis as the RGB camera 51 that obtains the captured video vC obtained by capturing the display video (background video vB) and the object (see Figs. 13 and 14) .

For example, it is assumed that the camera 502 includes the RGB camera 51 that obtains the captured video vC and the SWIR camera 52 as coaxial cameras. Thus, a video having the same angle of view as the captured video vC can also be obtained by the SWIR camera 52. Therefore, the mask MK generated from the video of the SWIR camera 52 can be matched with the captured video vC captured by the RGB camera 51, and the background area ARb and the foreground area ARf can be appropriately separated.

Note that, although the video processing unit 85 in the rendering engine 520 in Fig. 8 has been described as an example of the video processing unit of the present technology, for example, a video processing unit may be provided in an information processing device other than the rendering engine 520, and the processing described in the embodiment may be performed. Alternatively, the camera 502 or the like may include a video processing unit to perform the processing described in the embodiment.

The processing examples of the first, second, and third embodiments can also be combined. That is, all or some of the processing examples of the first, second, and third embodiments can be executed in combination, in the rendering engine 520 or another information processing device 70.

The processing examples of the first, second, and third embodiments can also be implemented by cloud computing. For example, in the production ST2, the functions of the rendering engine 520 and the asset server 530 may be implemented by the information processing device 70 as a cloud server.

The program of the embodiment is, for example, a program for causing a processor such as a CPU or a DSP, or a device including the processor to execute the processing of the video processing unit 85 described above.

That is, the program of the embodiment is a program for causing the information processing device 70 to execute determination processing regarding the object video vOB and the display video vD in the captured video vC, by using the mask MK that separates the display video vD and the object video vOB in the captured video vC obtained by capturing the display video vD (for example, the background video vB) of the display device and the object.

With such a program, the information processing device 70 that can be used for the production ST2 and the post-production ST3 described above can be implemented by various computer devices.

Such a program can be recorded in advance in an HDD as a recording medium built in a device such as a computer device, a ROM in a microcomputer having a CPU, or the like. Furthermore, such a program can be temporarily or permanently stored (recorded) in a removable recording medium such as a flexible disk, a compact disc read only memory (CD-ROM), a magneto optical (MO) disk, a digital versatile disc (DVD), a Blu-ray Disc (registered trademark), a magnetic disk, a semiconductor memory, or a memory card. Such a removable recording medium can be provided as so-called package software.

Furthermore, such a program can be installed from the removable recording medium into a personal computer or the like, or can be downloaded from a download site via a network such as a local area network (LAN) or the Internet.

Furthermore, such a program is suitable for providing the information processing device 70 of the embodiment in a wide range. For example, by downloading the program to a personal computer, a communication device, a portable terminal device such as a smartphone or a tablet, a mobile phone, a game device, a video device, a personal digital assistant (PDA), or the like, these devices can be caused to function as the information processing device 70 of the present disclosure.

Note that, the effects described in the present specification are merely examples and are not limited, and other effects may be provided.

Note that the present technology can also have the following configurations.
(1) An information processing device including:
   a video processing unit configured to perform determination processing related to an object video and a display video in a captured video, by using mask information for separating a display video and an object video in the captured video obtained by capturing a display video of a display device and an object.
(2) The information processing device according to (1) above, in which
   a display video displayed on the display device is a background video obtained by rendering 3D background data, and
   the captured video is a video obtained by imaging an object with a display device displaying the background video on a background.
(3) The information processing device according to (1) or (2) above, in which
   as the determination processing, the video processing unit
   performs processing of determining whether a subject recognized by subject determination in the captured video is an object video or is a display video.
(4) The information processing device according to any one of (1) to (3) above, in which
   as the determination processing, the video processing unit
   determines, in the captured video, an object video area in which an object video is shown or a display video area in which a display video is shown, and performs subject determination in either the object video area or the display video area.
(5) The information processing device according to any one of (1) to (4) above, in which
   the video processing unit
   controls a camera that captures a display video of the display device and an object, on the basis of a result of the determination processing.
(6) The information processing device according to any one of (1) to (5) above, in which
   the video processing unit
   performs control related to display of a subject on a camera that captures a display video of the display device and an object, on the basis of a result of the determination processing.
(7) The information processing device according to any one of (1) to (6) above, in which
   the video processing unit
   performs control related to a focusing operation on a camera that captures a display video of the display device and an object, on the basis of a result of the determination processing.
(8) The information processing device according to any one of (1) to (7) above, in which
   the video processing unit
   performs exposure control on a camera that captures a display video of the display device and an object, on the basis of a result of the determination processing.
(9) The information processing device according to any one of (1) to (8) above, in which
   the video processing unit
   performs control related to a display video of the display device on the basis of a result of the determination processing.
(10) The information processing device according to any one of (1) to (9) above, in which the video processing unit
   performs control related to a focus state of a display video of the display device on the basis of a result of the determination processing.
(11) The information processing device according to any one of (1) to (10) above, in which
   the video processing unit
   performs control related to luminance of a display video of the display device on the basis of a result of the determination processing.
(12) The information processing device according to any one of (1) to (11) above, in which
   the video processing unit
   generates metadata to be associated with the captured video with regard to the determination processing.
(13) The information processing device according to (12) above, in which
   the metadata includes a determination result of the determination processing for a subject of a captured video.
(14) The information processing device according to (12) or (13) above, in which
   the metadata includes a control parameter based on a determination result of the determination processing for a subject or an area of a captured video.
(15) The information processing device according to any one of (12) to (14) above, in which
   the metadata includes the mask information.
(16) The information processing device according to any one of (1) to (15) above, in which
   the video processing unit generates the mask information for each frame of the captured video at a time of imaging, and performs the determination processing in the frame.
(17) The information processing device according to any one of (1) to (16) above, in which
   the mask information is generated on the basis of a video obtained by an infrared short wavelength camera that captures a same video as a captured video.
(18) The information processing device according to (17) above, in which
   the infrared short wavelength camera is configured in such a manner that subject light is incident on a same optical axis as a camera that obtains a captured video obtained by capturing the display video and an object.
(19) A video processing method including,
   by an information processing device:
   performing determination processing related to an object video and a display video in a captured video, by using mask information for separating a display video and an object video in the captured video obtained by capturing a display video of a display device and an object.
(20) A program for causing an information processing device to execute:
   determination processing related to an object video and a display video in a captured video, by using mask information for separating a display video and an object video in the captured video obtained by capturing a display video of a display device and an object.

### REFERENCE SIGNS LIST

- 70: Information processing device
- 71: CPU
- 85: Video processing unit
- 500: Imaging system
- 501: Performance area
- 502, 502a, 502b: Camera
- 503: Output monitor
- 505: LED wall
- 506: LED panel
- 520: Rendering engine
- 530: Asset server
- 540: Sync generator
- 550: Operation monitor
- 560: Camera tracker
- 570: LED processor
- 580: Light
- 581: Lighting controller
- 590: Display controller
- vB: Background video
- vBC: Capturing region video
- vC: Captured video
- MK: Mask
- ARb: Background area
- ARf: Foreground area
- vD: Display video
- vOB: Object video

## Claims

1. An information processing device comprising:
a video processing unit configured to perform determination processing related to an object video and a display video in a captured video, by using mask information for separating a display video and an object video in the captured video obtained by capturing a display video of a display device and an object.

2. The information processing device according claim 1, wherein
a display video displayed on the display device is a background video obtained by rendering 3D background data, and
the captured video is a video obtained by imaging an object with a display device displaying the background video on a background.

3. The information processing device according to claim 1, wherein
as the determination processing, the video processing unit
performs processing of determining whether a subject recognized by subject determination in the captured video is an object video or is a display video.

4. The information processing device according to claim 1, wherein
as the determination processing, the video processing unit
determines, in the captured video, an object video area in which an object video is shown or a display video area in which a display video is shown, and performs subject determination in either the object video area or the display video area.

5. The information processing device according to claim 1, wherein
the video processing unit
controls a camera that captures a display video of the display device and an object, on a basis of a result of the determination processing.

6. The information processing device according to claim 1, wherein
the video processing unit
performs control related to display of a subject on a camera that captures a display video of the display device and an object, on a basis of a result of the determination processing.

7. The information processing device according to claim 1, wherein
the video processing unit
performs control related to a focusing operation on a camera that captures a display video of the display device and an object, on a basis of a result of the determination processing.

8. The information processing device according to claim 1, wherein
the video processing unit
performs exposure control on a camera that captures a display video of the display device and an object, on a basis of a result of the determination processing.

9. The information processing device according to claim 1, wherein
the video processing unit
performs control related to a display video of the display device on a basis of a result of the determination processing.

10. The information processing device according to claim 1, wherein
the video processing unit
performs control related to a focus state of a display video of the display device on a basis of a result of the determination processing.

11. The information processing device according to claim 1, wherein
the video processing unit
performs control related to luminance of a display video of the display device on a basis of a result of the determination processing.

12. The information processing device according to claim 1, wherein
the video processing unit
generates metadata to be associated with the captured video with regard to the determination processing.

13. The information processing device according to claim 12, wherein
the metadata includes a determination result of the determination processing for a subject of a captured video.

14. The information processing device according to claim 12, wherein
the metadata includes a control parameter based on a determination result of the determination processing for a subject or an area of a captured video.

15. The information processing device according to claim 12, wherein
the metadata includes the mask information.

16. The information processing device according to claim 1, wherein
the video processing unit generates the mask information for each frame of the captured video at a time of imaging, and performs the determination processing in the frame.

17. The information processing device according to claim 1, wherein
the mask information is generated on a basis of a video obtained by an infrared short wavelength camera that captures a same video as the captured video.

18. The information processing device according to claim 17, wherein
the infrared short wavelength camera is configured in such a manner that subject light is incident on a same optical axis as a camera that obtains a captured video obtained by capturing the display video and an object.

19. A video processing method comprising,
by an information processing device:
performing determination processing related to an object video and a display video in a captured video, by using mask information for separating a display video and an object video in the captured video obtained by capturing a display video of a display device and an object.

20. A program for causing an information processing device to execute:
determination processing related to an object video and a display video in a captured video, by using mask information for separating a display video and an object video in the captured video obtained by capturing a display video of a display device and an object.
